(19) Europäisches Patentamt / European Patent Office / Office européen des brevets

(11) **EP 4 231 381 A1**

(12) **EUROPEAN PATENT APPLICATION**
published in accordance with Art. 153(4) EPC

(43) Date of publication:
**23.08.2023 Bulletin 2023/34**

(21) Application number: **21897597.7**

(22) Date of filing: **28.10.2021**

(51) International Patent Classification (IPC):
**H01M 4/14** (2006.01)    **H01M 4/62** (2006.01)
**H01M 10/06** (2006.01)

(52) Cooperative Patent Classification (CPC):
**H01M 4/14; H01M 4/62; H01M 10/06;** Y02E 60/10

(86) International application number:
**PCT/JP2021/039741**

(87) International publication number:
**WO 2022/113621 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2020 JP 2020197579**

(71) Applicant: **GS Yuasa International Ltd.**
**Kisshoin, Minami-ku,**
**Kyoto-shi, Kyoto 601-8520 (JP)**

(72) Inventor: **KAGOHASHI, Hiroki**
**Kyoto-shi, Kyoto 601-8520 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **LEAD-ACID BATTERY**

(57)    A lead-acid battery includes at least one cell including an element and an electrolyte solution. The element includes a negative electrode plate, a positive electrode plate, and a separator interposed between the negative electrode plate and the positive electrode plate. The negative electrode plate includes a negative electrode material. The negative electrode material contains an organic expander, and a polymer compound having a peak in a range of 3.2 ppm or more and 3.8 ppm or less in a chemical shift of a $^1$H-NMR spectrum measured using deuterated chloroform as a solvent. A median diameter (mid-diameter) of the negative electrode material in a pore distribution on a volume basis is 2.15 pm or less.

Fig. 1

EP 4 231 381 A1

**Description**

TECHNICAL FIELD

The present invention relates to a lead-acid battery.

BACKGROUND ART

Lead-acid batteries are in use for various applications, including automotive and industrial applications. The lead-acid batteries include a negative electrode plate, a positive electrode plate, a separator (or mat), an electrolyte solution, and the like. Each plate includes a current collector and an electrode material. An additive may be added to component members of the lead-acid battery from the viewpoint of imparting various functions.

Patent Document 1 discloses a lead-acid battery in which a copolymer of propylene oxide and ethylene oxide is added to a negative electrode plate active material in combination with lignin sulfonic acid.

Patent Document 2 discloses a negative electrode plate for a lead-acid battery which includes a negative active material containing spongy lead as a main component, and a current collector, the negative active material containing carbon black at 1.0 mass% or more and 2.5 mass% or less and a bisphenol condensate at 0.1 mass% or more and 0.9 mass% or less per 100 mass% of spongy lead, and having a median pore size of 0.5 pm or less on a volume basis and a porosity of 0.22 mL/g or more and 0.4 mL/g or less, in a formed stage.

Patent Document 3 discloses a lead-acid battery including: a positive electrode and a negative electrode each immersed in an electrolyte solution, the positive electrode having a first surface and a second surface opposite to the first surface, the negative electrode having a first surface and a second surface opposite to the first surface; and a fiber-attached mat covering at least a part of at least one of the first surface and the second surface of at least one of the positive electrode and the negative electrode, in which fiber-attached mat contains a plurality of fibers covered with a sizing composition, a binding composition, and one or more additives, the additives include a rubber additive, a rubber derivative, aldehyde derivative, an aldehyde derivative, a metal salt, and a metal salt, fatty alcohol ethioxylate (alkoxylated alcohol having a terminal OH group), an ethylene-propylene oxide block copolymer, sulfuric acid ester (alkyl sulfate and alkyl ether sulfate), sulfonic acid ester (alkyl and olefin sulfonates), phosphoric acid ester, sulfosuccinate, polyacrylic acid, polyaspartic acid, perfluoroalkyl sulfonic acid, polyvinyl alcohol, lignin, a lignin derivative, phenol formaldehyde resin, cellulose and wood flour, and the additive reduces water content loss in the lead-acid battery.

PRIOR ART DOCUMENT

PATENT DOCUMENTS

Patent Document 1: JP-A-60-182662
Patent Document 2: JP-A-2014-123525
Patent Document 3: JP-W-2017-525092

SUMMARY OF THE INVENTION

PROBLEMS TO BE SOLVED BY THE INVENTION

The lead-acid battery is sometimes used in a poor charged state called partial state of charge (PSOC). For example, lead-acid batteries mounted on idling stop start (ISS) vehicles are used in the PSOC. If the lead-acid battery is repeatedly charged and discharged in PSOC, lead sulfate is likely to accumulate, so that life performance is likely to be deteriorated. For suppressing accumulation of lead sulfate, high charge acceptability is required. If the pore size of the negative electrode material is reduced, charge acceptability is improved, but the amount of overcharge increases. Thus, it is difficult to reduce the amount of overcharge while securing high charge acceptability.

MEANS FOR SOLVING THE PROBLEMS

One aspect of the present invention relates to a lead-acid battery including at least one cell including an element and an electrolyte solution, wherein

the element includes a negative electrode plate, a positive electrode plate, and a separator interposed between the negative electrode plate and the positive electrode plate,
the negative electrode plate includes a negative electrode material,
the negative electrode material contains an organic expander, and a polymer compound having a peak in a range of 3.2 ppm or more and 3.8 ppm or less in a chemical shift of a $^1$H-NMR spectrum measured using deuterated chloroform as a solvent, and
a median diameter of the negative electrode material in a pore distribution on a volume basis is 2.15 pm or less.

Another aspect of the present invention relates to a lead-acid battery including at least one cell including an element and an electrolyte solution, wherein

the element includes a negative electrode plate, a positive electrode plate, and a separator interposed between the negative electrode plate and the positive electrode plate,
the negative electrode plate includes a negative electrode material,
the negative electrode material contains an organic expander, and a polymer compound having a repeating structure of oxy $C_{2-4}$ alkylene units, and
a median diameter of the negative electrode material in a pore distribution on a volume basis is 2.15 pm or less.

BRIEF DESCRIPTION OF THE DRAWING

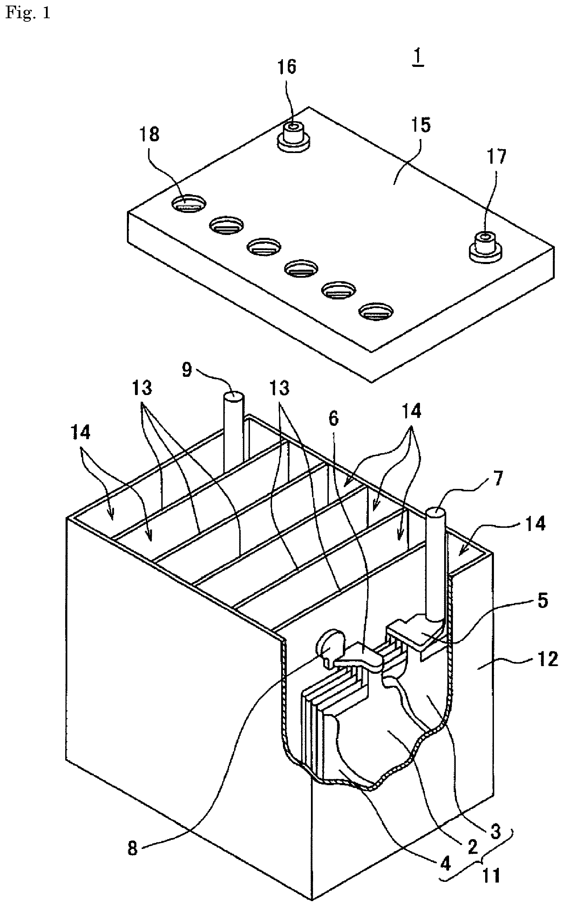

Fig. 1 is a partially cutaway exploded perspective view showing an appearance and an internal structure of a lead-acid battery according to one aspect of the present invention.

MODE FOR CARRYING OUT THE INVENTION

In a lead-acid battery, in general, charge acceptability is improved as the pore size of a negative electrode material reduces. This is because the movement distance of lead ions in reduction of lead sulfate decreases, so that the diffusion rate of lead ions relatively increases. However, if the pore size of the negative electrode material decreases, the specific surface area of the negative electrode material increases, resulting in acceleration of a side reaction which generates hydrogen from protons during overcharge. In this way, a large amount of electricity is consumed by the side reaction during overcharge, so that the amount of overcharge increases. Thus, there is a trade-off relationship between reduction of the amount of overcharge and the improvement of charge acceptability, and it is difficult to achieve both the former and the latter. If the amount of overcharge increases, the amount of hydrogen produced also increases, and therefore the amount of the electrolyte solution significantly decreases.

In view of the above, the lead-acid battery according to one aspect of the present invention includes at least one cell including an element and an electrolyte solution. The element includes a negative electrode plate, a positive electrode plate, and a separator interposed between the negative electrode plate and the plate. The negative electrode plate includes a negative electrode material. The negative electrode material contains an organic expander, and a polymer compound having a peak in a range of 3.2 ppm or more and 3.8 ppm or less in a chemical shift of a $^1$H-NMR spectrum measured using deuterated chloroform as a solvent. The median diameter of the negative electrode material in a pore distribution on a volume basis is 2.15 pm or less. Note that the peak appearing in a chemical shift in a range of 3.2 ppm or more and 3.8 ppm or less in the $^1$H-NMR spectrum is derived from an oxy $C_{2-4}$ alkylene unit.

The lead-acid battery according to another aspect of the present invention includes at least one cell including an element and an electrolyte solution. The element includes a negative electrode plate, a positive electrode plate, and a separator interposed between the negative electrode plate and the positive electrode plate. The negative electrode plate includes a negative electrode material. The negative electrode material contains an organic expander, and a polymer compound having a repeating structure of oxy $C_{2-4}$ alkylene units. The median diameter of the negative electrode material in a pore distribution on a volume basis is 2.15 pm or less.

Hereinafter, the median diameter in a pore distribution on a volume basis is sometimes referred to simply as an average pore size.

In the lead-acid batteries according to one aspect and another aspect of the present invention, the negative electrode material contains an organic expander, and a polymer compound as described above, and the average pore size of the negative electrode material is controlled to be in a small range, for example, a range specified above. Such a configuration enables the amount of overcharge to be reduced while securing high charge acceptability. Generation of hydrogen during overcharge is suppressed, so that a decrease in amount of the electrolyte solution can be reduced, and therefore there is an advantage for increasing the life of the lead-acid battery.

The reason why it is possible to reduce the amount of overcharge while securing high charge acceptability in the lead-acid batteries according to one aspect and another aspect of the present invention may as follows. First, the polymer compound has a repeating structure of oxy $C_{2-4}$ alkylene units, and therefore is likely to have a linear structure.

In addition, the negative electrode material has a large specific surface area, so that in the negative electrode material, the lead surface is thinly and widely covered with the polymer compound. Since the surface of lead is covered with the polymer compound over a wide range of the lead surface, a hydrogen overvoltage increases, so that a side reaction which generates hydrogen hardly occurs during overcharge. Thus, the average pore size of the negative electrode material is small, so that even if the specific surface area is large, the amount of overcharge can be reduced. Even a very small amount of the polymer compound can provide an effect of reducing the amount of overcharge, and therefore when the polymer compound is contained in the negative electrode material, the polymer compound can be present near lead. This may be the reason why high adsorption action of the oxy $C_{2-4}$ alkylene unit on lead is exhibited. Since the negative electrode material contains the polymer compound, the polymer compound is easily attached to the surface of lead sulfate generated during discharge, so that the solubility of lead sulfate during charge tends to decrease. However, since the thickness of the film of the polymer compound covering the surfaces of lead and lead sulfate is small, the degree to which dissolution of lead sulfate and transfer of electrons in reduction of lead ions to lead are inhibited by the film of the polymer compound during charge is lessened. In addition, since the film of the polymer compound is thin, and uneven distribution of polymer compounds is suppressed, there is little steric hindrance by the film of the polymer compound, so that hindrance to movement of lead ions in pores of the negative electrode material is reduced. Therefore, the high diffusion rate of lead ions, which is improved by controlling the average pore size of the negative electrode material to be small, is maintained. This may be the reason why deterioration of charge acceptability is suppressed even when the negative electrode material contains a polymer compound.

Even if the average pore size of the negative electrode material is larger than 2.15 pm, the amount of overcharge can be reduced with the polymer compound covering the surface of lead to increase the hydrogen overvoltage when the negative electrode material contains the polymer compound. However, since the average pore size is large, the thickness of the film of the polymer compound attached on the surface of lead sulfate tends to increase because the specific surface area of the negative electrode material decreases. Consequently, dissolution of lead sulfate is likely to be inhibited during charge, and a reductive reaction of lead ions to lead is also likely to be inhibited. Further, since the average pore size of the negative electrode material is large, the diffusion rate of lead ions is small. This results in significant deterioration of charge acceptability. Therefore, if the average pore size of the negative electrode material is larger than 2.15 pm, it is difficult to achieve both a low amount of overcharge and high charge acceptability even when the polymer compound is used.

The above-described effect of the polymer compound is exhibited by covering the surface of lead with the polymer compound. Therefore, it is important that the polymer compound is present in the vicinity of lead. This enables the effect of the polymer compound to be effectively exhibited. Thus, it is important that the negative electrode material contains the polymer compound regardless of whether or not a component of the lead-acid battery other than the negative electrode material contains the polymer compound.

In the lead-acid battery according to one aspect of the present invention, the polymer compound may contain an oxygen atom bonded to a terminal group and a $-CH_2-$ group and/or a $-CH<$ group bonded to the oxygen atom. In the $^1$H-NMR spectrum, a ratio of an integrated value of the peak of 3.2 ppm to 3.8 ppm to the sum of the integrated value of the peak of 3.2 ppm to 3.8 ppm, an integrated value of a peak of hydrogen atoms of the $-CH_2-$ group bonded to the oxygen atom, and an integrated value of a peak of a hydrogen atom of the $-CH<$ group bonded to the oxygen atom is preferably 85% or more. Such polymer compounds contain many oxy $C_{2-4}$ alkylene units in the molecule. Therefore, it is considered that the polymer compound easily adsorbs to lead and is likely to have a linear structure, so that it becomes easy to thinly cover the lead surface. Thus, the amount of overcharge can be more effectively reduced, and the effect of suppressing the deterioration of the charge acceptability can be further enhanced.

In the $^1$H-NMR spectrum, the polymer compound having a peak in the chemical shift range of 3.2 ppm to 3.8 ppm preferably has a repeating structure of oxy $C_{2-4}$ alkylene units. When the polymer compound having a repeating structure of oxy $C_{2-4}$ alkylene units is used, it is considered that the polymer compound becomes easier to adsorb to lead, and it becomes easy to thinly cover the lead surface by easily having a linear structure. Thus, the amount of overcharge can be more effectively reduced, and the effect of suppressing the deterioration of the charge acceptability can be further enhanced.

The polymer compound may contain at least one selected from the group consisting of a hydroxy compound having a repeating structure of oxy $C_{2-4}$ alkylene units, an etherified product of the hydroxy compound, and an esterified product of the hydroxy compound. Here, the hydroxy compound is at least one selected from the group consisting of poly $C_{2-4}$ alkylene glycol, copolymer having a repeating structure of oxy $C_{2-4}$ alkylene, and poly $C_{2-4}$ alkylene oxide adduct of a polyol. When such a polymer compound is used, the deterioration of the charge acceptability can be further suppressed. The effect of reducing the amount of overcharge is high.

The polymer compound may have a repeating structure of oxypropylene units ($-O-CH(-CH_3)-CH_2-$). It is considered that such a polymer compound is suppressed to be thickly attached to the lead surface while having high adsorptivity to lead, and therefore has an excellent balance therebetween. Thus, the amount of overcharge can be more effectively reduced, and the effect of suppressing the deterioration of the charge acceptability can be further enhanced.

The polymer compound may have one or more hydrophobic groups, and at least one of the hydrophobic groups may be a long-chain aliphatic hydrocarbon group having 8 or more carbon atoms. The action of such a hydrophobic group suppresses excessive covering of the lead surface with the polymer compound, so that it is possible to further enhance the effect of suppressing the deterioration of charge acceptability. It is preferable that the polymer compound has a repeating structure of oxyethylene units. When the polymer compound has a repeating structure of oxyethylene units having high hydrophilicity, the polymer compound can be selectively adsorbed to lead. By the balance between the hydrophobic group and the hydrophilic group, the amount of overcharge can be more effectively reduced, and the effect of suppressing the deterioration of the charge acceptability can be further enhanced.

As described above, since the polymer compound can thinly cover the lead surface while having high adsorptivity to lead, even if the content of the polymer compound in the negative electrode material is small, the amount of overcharge can be reduced. Even if the content of the polymer compound in the negative electrode material is small, it is possible to suppress the deterioration of the charge acceptability because a sufficient effect of reducing the amount of overcharge can be secured. From the viewpoint of further enhancing the effect of suppressing the deterioration of the charge acceptability, the content of the polymer compound in the negative electrode material is preferably 400 ppm or less on a mass basis. From the viewpoint of securing a higher effect of reducing the amount of overcharge, the content of the polymer compound in the negative electrode material is preferably 8 ppm or more.

In the lead-acid battery, it is sufficient that the polymer compound can be contained in the negative electrode material, and the source of the polymer compound contained in the negative electrode material is not particularly limited. The polymer compound may be contained in any of the components (for example, a negative electrode plate, a positive electrode plate, an electrolyte solution and a separator) of the lead-acid battery when preparing the lead-acid battery. The polymer compound may be contained in one component, or may be contained in two or more components (for example, a negative electrode plate and an electrolyte solution).

It is preferable that the polymer compound contains a compound having a number average molecular weight (Mn) of 10,000 or less. In this case, the thickness of the film of the polymer compound covering the surfaces of lead and lead sulfate can be further reduced. The deterioration of the charge acceptability can be further suppressed.

It is preferable that the polymer compound contains a compound having Mn of 400 or more. In this case, higher adsorptivity to lead can be secured, so that the surface of lead can be easily covered with the polymer compound to further reduce the amount of overcharge.

From the viewpoint of securing a high low-temperature high-rate discharge capacity, the content of the organic expander in the negative electrode material is preferably 0.005 mass% or more. From the viewpoint of further enhancing the effect of suppressing the deterioration of the charge acceptability, the content of the organic expander in the negative electrode material is preferably 0.3 mass% or less.

The organic expander may contain at least a lignin compound. Among organic expanders, a lignin compound tends to reduce charge acceptability. Even if the negative electrode material contains such a lignin compound as an organic expander, the deterioration of the charge acceptability can be suppressed to easily secure high charge acceptability when the average pore size is adjusted and a specific polymer compound is used.

The bulk density of the negative electrode material is preferably 3.6 g/cm$^3$ or more. In this case, the specific surface area of the negative electrode material increases, so that the thickness of the film of the polymer compound formed on the surface of lead sulfate decreases. Therefore, dissolution of lead sulfate during charging is further unlikely to be inhibited, so that it is possible to further suppress the deterioration of the charge acceptability.

The lead-acid battery may be either a valve regulated (sealed) lead-acid battery (VRLA type lead-acid battery) or a flooded-type (vented type) lead-acid battery.

In the present specification, the average pore size of the negative electrode material, the content of each of the polymer compound and the organic expander in the negative electrode material, and the bulk density of the negative electrode material are determined for a negative electrode plate taken out from a fully discharged lead-acid battery.

(Description of terminology)

(Electrode material)

The negative electrode material and a positive electrode material are each usually held by the current collector. The electrode material is a portion of the plate which excludes the current collector. A member such as a mat or a pasting paper may be stuck to the plate. Such a member (also referred to as a sticking member) is used integrally with the plate and is thus assumed to be included in the plate. When the plate includes the sticking member (such as a mat or a pasting paper), the electrode material is a portion of the plate which excludes the current collector and the sticking member from the plate.

Among positive electrode plates, a clad-type positive electrode plate includes a plurality of porous tubes, a spine inserted into each tube, a current collector connecting a plurality of spines, a positive electrode material with which a spine inserted tube is filled, and a spine protector connecting a plurality of tubes. In the clad-type positive electrode plate, the positive electrode material is a portion of the plate which excludes the tubes, the spines, the current collecting portion and the spine protector. In the clad-type positive electrode plate, the spine and the current collector may be collectively referred to as a positive current collector.

(Average pore size)

The median diameter of the negative electrode material in a pore distribution on a volume basis is a pore diameter corresponding to the median value of the integrated pore volume (volume median pore diameter) in a pore distribution on a volume basis which is determined by a mercury intrusion method. In the present specification, the median diameter in a pore distribution on a volume basis is referred to simply as an average pore size for convenience.

(Bulk density of negative electrode material)

The bulk density of the negative electrode material is a density ($g/cm^3$) determined by dividing the mass of the negative electrode material by a bulk volume determined by a mercury intrusion method. The bulk density is determined for a sample of an unground negative electrode material taken out from a negative electrode plate taken from the lead-acid battery. The unground sample is taken from the vicinity of the center of the negative electrode plate in a planar direction.

(Polymer compound)

The polymer compound satisfies at least one of the following conditions (i) and (ii).

Condition (i)

The polymer compound has a peak in a range of 3.2 ppm or more and 3.8 ppm or less in a chemical shift of a $^1$H-NMR spectrum measured using deuterated chloroform as a solvent.

Condition (ii)

The polymer compound has a repeating structure of oxy $C_{2-4}$ alkylene units.
In the condition (i), the peak appearing in the range of 3.2 ppm or more and 3.8 ppm or less is derived from the oxy $C_{2-4}$ alkylene unit. That is, the polymer compound satisfying the condition (ii) is also the polymer compound satisfying the condition (i). The polymer compound satisfying the condition (i) may have a repeating structure of monomer units other than the oxy $C_{2-4}$ alkylene unit, and may have a certain level of molecular weight. The number average molecular weight (Mn) of the polymer compound satisfying the above condition (i) or (ii) may be, for example, 300 or more.

(Oxy $C_{2-4}$ alkylene unit)

Note that the oxy $C_{2-4}$ alkylene unit is a unit represented by -O-$R^1$-($R^1$ represents a $C_{2-4}$ alkylene group.).

(Organic expander)

The organic expander refers to an organic compound among compounds having a function of suppressing shrinkage of lead as a negative active material when charge-discharge of the lead-acid battery is repeated.

(Number average molecular weight)

In the present description, the number average molecular weight (Mn) is determined by gel permeation chromatography (GPC). A standard substance used for determining Mn is polyethylene glycol.

(Weight average molecular weight)

In the present specification, the weight average molecular weight (Mw) is determined by GPC. A standard substance used for determining the Mw is sodium polystyrene sulfonate.

(Content of sulfur element in organic expander)

The sulfur element content in the organic expander being X pmol/g means that the content of the sulfur element contained per 1 g of the organic expander is X pmol.

(Fully charged state)

The fully charged state of the flooded-type lead-acid battery is defined by the definition of JIS D 5301: 2019. More specifically, the following state is defined as the fully charged state: the lead-acid battery is charged in a water bath at 25°C $\pm$ 2°C at a current (A) 0.2 times as large as a numerical value (numerical value whose unit is Ah) described as a rated capacity until a terminal voltage (V) during charge measured every fifteen minutes or an electrolyte solution density subjected to temperature correction to 20°C exhibits a constant value at three significant digits continuously three times. In the case of a valve regulated lead-acid battery, the fully charged state is a state where the lead-acid battery is subjected to constant current constant voltage charge of 2.23 V/cell at the current (A) 0.2 times as large as the numerical value (numerical value whose unit is Ah) described as the rated capacity in an air tank of 25°C $\pm$ 2°C, and the charge is completed when the charge current during constant voltage charge becomes a value (A) of 0.005 times as large as the numerical value (numerical value whose unit is Ah) described in the rated capacity.

The lead-acid battery in the full charge state refers to a lead-acid battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

(Up-down direction of lead-acid battery or components of lead-acid battery)

In the present specification, the up-down direction of the lead-acid battery or components (such as plate, container, and separator) of the lead-acid battery means the up-down direction of the lead-acid battery in the vertical direction when the lead-acid battery is in use. Each of the positive electrode plate and the negative electrode plate includes a lug for connecting to an external terminal. In a horizontal valve regulated lead-acid battery or the like, the lug may be provided at a side portion of the plate so as to protrude laterally; however, in many lead-acid batteries, the lug is usually provided at an upper portion of the plate so as to protrude upward.

Hereinafter, the lead-acid battery according to an embodiment of the present invention will be described for each of the main components, but the present invention is not limited to the following embodiment.

[Lead-acid battery]

(Negative electrode plate)

The negative electrode plate usually includes a negative current collector in addition to a negative electrode material.

(Negative current collector)

The negative current collector may be formed by casting lead (Pb) or a lead alloy, or may be formed by processing a lead sheet or a lead alloy sheet. Examples of the processing method include expanding processing or punching processing. It is preferable to use the grid-like current collector as the negative current collector because the negative electrode material is easy to support.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug part of the negative current collector. The surface layer of the lug part may contain Sn or a Sn alloy.

(Negative electrode material)

The average pore size of the negative electrode material may be 2.15 pm or less, and may be 2.11 pm or less. If the average pore size exceeds 2.15 pm, charge acceptability is significantly deteriorated when the negative electrode material contains a polymer compound. The average pore size of the negative electrode material is, for example, 0.95 pm or more, and may be 0.99 pm or more or 1 pm or more. When the average pore size of the negative electrode material is in the above-mentioned range, blocking of pores by lead sulfate generated during discharge is reduced, so that discharge performance (for example, five-hour rate capacity or low-temperature high-rate discharge capacity) can be enhanced.

The average pore size of the negative electrode material may be 0.95 pm or more and 2.15 pm or less (or 2.11 pm or less), 0.99 pm or more and 2.15 pm or less (or 2.11 pm or less), or 1 pm or more and 2.15 pm or less (or 2.11 pm or less).

The average pore size can be adjusted by selecting the type of organic expander, using different types of organic expanders in combination, or adjusting at least one selected from the group consisting of the content of the sulfur element in the organic expander, the content of the organic expander in the negative electrode material, the content of the polymer compound in the negative electrode material, the content of a dry solid in a negative electrode paste used for preparing the negative electrode plate, and the bulk density of the negative electrode material.

The bulk density of the negative electrode material is, for example, $3.6 \text{ g/cm}^3$ or more, may be $3.7 \text{ g/cm}^3$ or more, may be $3.8 \text{ g/cm}^3$ or more, or may be $4.0 \text{ g/cm}^3$ or more. When the bulk density is in the above-mentioned range, the deterioration of the charge acceptability can be further suppressed. The bulk density of the negative electrode material is, for example, $5.5 \text{ g/cm}^3$ or less, and may be $5 \text{ g/cm}^3$ or less.

The bulk density of the negative electrode material may be $3.6 \text{ g/cm}^3$ or more and $5.5 \text{ g/cm}^3$ or less (or $5 \text{ g/cm}^3$ or less), $3.7 \text{ g/cm}^3$ or more and $5.5 \text{ g/cm}^3$ or less (or $5 \text{ g/cm}^3$ or less), $3.8 \text{ g/cm}^3$ or more and $5.5 \text{ g/cm}^3$ or less (or $5 \text{ g/cm}^3$ or less), or $4.0 \text{ g/cm}^3$ or more and $5.5 \text{ g/cm}^3$ or less (or $5 \text{ g/cm}^3$ or less).

The negative electrode material contains an organic expander and the above-described polymer compound. The negative electrode material further contains a negative active material (specifically, lead or lead sulfate) that exhibits a capacity through a redox reaction. The negative electrode material may contain at least one selected from the group consisting of a carbonaceous material and other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound)

The polymer compound has a peak in a range of 3.2 ppm or more and 3.8 ppm or less in a chemical shift of a $^1$H-NMR spectrum. Such polymer compounds have oxy $C_{2-4}$ alkylene units. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one type or two or more types of such oxy $C_{2-4}$ alkylene units.

The polymer compound preferably has a repeating structure of oxy $C_{2-4}$ alkylene units. The repeating structure may contain one type of oxy $C_{2-4}$ alkylene unit, or may contain two or more kinds of oxy $C_{2-4}$ alkylene units. The polymer compound may contain one type of the repeating structure or two or more kinds of repeating structures.

The polymer compound having a repeating structure of oxy $C_{2-4}$ alkylene units also includes polymer compounds classified as a surfactant (more specifically, a nonionic surfactant).

Examples of the polymer compound include hydroxy compounds having a repeating structure of oxy $C_{2-4}$ alkylene units (poly $C_{2-4}$ alkylene glycols, copolymers having a repeating structure of oxy $C_{2-4}$ alkylene, poly $C_{2-4}$ alkylene oxide adducts of a polyol, and the like), etherified or esterified products of these hydroxy compounds, and the like.

Examples of the copolymer include copolymers containing different oxy $C_{2-4}$ alkylene units. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane and polyhydroxynorbornane), and the like are preferable, and among them, aliphatic polyols are preferable. Examples of the aliphatic polyol include aliphatic diols and polyols with three or more hydroxyl groups (for example, glycerin, trimethylolpropane, pentaerythritol, sugar or sugar alcohol), and the like. Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar or sugar alcohol include sucrose, erythritol, xylitol, mannitol and sorbitol. The sugar or sugar alcohol may have either a chain structure or a cyclic structure. In the polyalkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily have a linear structure, the polyol is preferably a diol.

The etherified product has an $-OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group). Among terminals of the polymer compound, some terminals may be etherified, or all terminals may be etherified. For example, one terminal of a main chain of the linear polymer compound may be an -OH group, and the other terminal may be an -OR$^2$ group.

The esterified product has an -O-C(=O)-R$^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein R$^3$ is an organic group). Among terminals of the polymer compound, some terminals may be esterified, or all terminals may be esterified. For example, one terminal of a main chain of the linear polymer compound may be an -OH group, and the other terminal may be an -O-C(=O)-R$^3$ group.

Examples of each of the organic groups R$^2$ and R$^3$ include a hydrocarbon group. The hydrocarbon group may have a substituent (for example, a hydroxy group, an alkoxy group, and/or a carboxy group). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, or an alkynyl group) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group, and a naphthyl group. Examples of the bisaryl group include monovalent groups corresponding to bisarene. Examples of the bisarene include biphenyl and bisarylalkanes (for example, bis $C_{6-10}$ aryl $C_{1-4}$ alkanes (such as 2,2-bisphenylpropane)).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), cycloalkenyl groups (cyclohexenyl group and cyclooctenyl group), and the like. The alicyclic hydrocarbon group also includes hydrogenated products of the aromatic hydrocarbon groups.

Among the hydrocarbon groups, an aliphatic hydrocarbon group is preferable from the viewpoint that the polymer compound easily attaches thinly to the lead surface. The aliphatic hydrocarbon group may be saturated or unsaturated. Examples of the aliphatic hydrocarbon group include an alkyl group, an alkenyl group, an alkynyl group, a dienyl group having two carbon-carbon double bonds, and a trienyl group having three carbon-carbon double bonds. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, 3 or more for a dienyl group, and 4 or more trienyl group, depending on the type of the aliphatic hydrocarbon group. Among them, an alkyl group and an alkenyl group are preferable from the viewpoint that the polymer compound easily attaches thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-nonyl, n-decyl, i-decyl, undecyl, lauryl (dodecyl), tridecyl, myristyl, pentadecyl, cetyl, heptadecyl, stearyl, icosyl, henicosyl, and behenyl.

Specific examples of the alkenyl group include vinyl, 1-propenyl, allyl, cis-9-heptadecen-1-yl, palmitoleyl, and oleyl. An alkenyl group may be, for example, a $C_{2-30}$ alkenyl group or a $C_{2-26}$ alkenyl group, a $C_{2-22}$ alkenyl group or a $C_{2-20}$ alkenyl group, or a $C_{10-20}$ alkenyl group.

When at least one selected from the group consisting of an etherified product of a hydroxy compound having a repeating structure of oxy $C_{2-4}$ alkylene units and an esterified product of a hydroxy compound having a repeating structure of oxy $C_{2-4}$ alkylene units are used among the polymer compounds, it is preferable because the effect of suppressing the deterioration of the charge acceptability can be further enhanced. Even when these polymer compounds are used, the amount of overcharge can be reduced. Among the polymer compounds as described above, polymer compounds having a repeating structure of oxypropylene units, polymer compounds having a repeating structure of oxyethylene units, and the like are preferable.

The polymer compound may have one or more hydrophobic groups. Examples of the hydrophobic group include an aromatic hydrocarbon group, an alicyclic hydrocarbon group, and a long-chain aliphatic hydrocarbon group among the above-mentioned hydrocarbon groups. Examples of the long-chain aliphatic hydrocarbon group include aliphatic hydrocarbon groups having 8 or more carbon atoms among the above-described aliphatic hydrocarbon groups (such as alkyl groups and alkenyl groups). The number of carbon atoms in the aliphatic hydrocarbon group is preferably 12 or more, more preferably 16 or more. Among them, the polymer compound having a long-chain aliphatic hydrocarbon group is preferable because it hardly causes excessive adsorption to lead and the effect of suppressing the deterioration of the charge acceptability is further enhanced. The polymer compound may be a polymer compound in which at least one of the hydrophobic groups is a long-chain aliphatic hydrocarbon group. The number of carbon atoms of the long-chain aliphatic hydrocarbon group may be 30 or less, 26 or less, or 22 or less.

The number of carbon atoms of the long-chain aliphatic hydrocarbon group may be 8 or more (or 12 or more) and 30 or less, 8 or more (or 12 or more) and 26 or less, 8 or more (or 12 or more) and 22 or less, 10 or more and 30 or less (or 26 or less), or 10 or more and 22 or less.

Among the polymer compounds, a polymer compound having a hydrophilic group and a hydrophobic group corresponds to a nonionic surfactant. The repeating structure of oxyethylene units exhibits high hydrophilicity and can be a hydrophilic group in the nonionic surfactant. Thus, the polymer compound having a hydrophobic group preferably has a repeating structure of oxyethylene units. The polymer compound as described above can suppress excessive coverage of the lead surface while being selectively adsorbed to lead due to a balance between hydrophobicity and high hydrophilicity due to the repeating structure of oxyethylene units. Thus, such a polymer compound is capable of further enhancing the effect of suppressing the deterioration of the charge acceptability while reducing the amount of overcharge. The polymer compound as described above can secure high adsorptivity to lead even with a relatively low molecular weight (for example, Mn is 1000 or less.).

Among the polymer compounds, a polyoxypropylene-polyoxyethylene block copolymer, an etherified product of a hydroxy compound having a repeating structure of oxyethylene units, an esterified product of a hydroxy compound having a repeating structure of oxyethylene units, and the like correspond to a nonionic surfactant.

In a polyoxypropylene-polyoxyethylene block copolymer or the like, the repeating structure of oxyethylene units corresponds to a hydrophilic group, and the repeating structure of oxypropylene units corresponds to a hydrophobic group. Such a copolymer is also encompassed by the polymer compound having a hydrophobic group.

Examples of the polymer compound having a hydrophobic group and having a repeating structure of oxyethylene units include etherified products of polyethylene glycol (such as alkyl ether), esterified products of polyethylene glycol (such as carboxylic acid ester), etherified products (such as alkyl ether) of a polyethylene oxide adduct of the polyol, esterified products of a polyethylene oxide adduct (such as carboxylic acid ester) of the polyol (such as polyols with three or more hydroxyl groups), and the like. Specific examples of the polymer compound as described above include polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether. However, the polymer compound is not limited thereto. Among them, use of an esterified product of polyethylene glycol, an esterified product of a polyethylene oxide adduct of the polyol, and the like is preferable because higher charge acceptability can be secured and the amount of overcharge can be remarkably reduced.

For the polymer compound classified as a surfactant, the HLB of the polymer compound is preferably 4 or more, more preferably 4.3 or more from the viewpoint of more easily reducing the reduction amount of the electrolyte solution. From the viewpoint of easily securing higher charge acceptability, the HLB of the polymer compound is preferably 18 or less, more preferably 10 or less or 9 or less, still more preferably 8.5 or less.

The HLB of the polymer compound may be 4 or more (or 4.3 or more) and 18 or less, or 4 or more (or 4.3 or more) and 10 or less. From the viewpoint of achieving an excellent balance between reduction of the amount of overcharge and improvement of charge acceptability, the HLB of the polymer compound is preferably 4 or more (or 4.3 or more) and 9 or less, or 4 or more (or 4.3 or more) and 8.5 or less.

HLB stands for Hydrophile Lipophile Balance, and is a numerical value representing the balance between hydrophobicity and hydrophilicity of a nonionic surfactant.

From the viewpoint of further enhancing the effect of reducing the amount of overcharge and easily securing higher charge acceptability, the case where the repeating structure of oxy $C_{2-4}$ alkylene includes at least a repeating structure of oxypropylene units is also preferable. In this case, although the charge acceptability tends to be lower than that in the case of the repeating structure of oxyethylene units, even in this case, high charge acceptability can be secured while the amount of overcharge is kept low. The polymer compound containing the oxypropylene unit has peaks derived from -CH< and -CH$_2$- of the oxypropylene unit in a range of 3.2 ppm to 3.8 ppm in a chemical shift of a $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of a $^1$H-NMR spectrum. The peak in the range of 3.2 ppm or more and 3.42 ppm or less is derived from -CH$_2$-, and the peak in the range of more than 3.42 ppm and 3.8 ppm or less is derived from -CH< and -CH$_2$-.

Examples of the polymer compound containing at least a repeating structure of oxypropylene units include polypropylene glycol, a copolymer having a repeating structure of oxypropylene units, a polypropylene oxide adduct of the polyol, etherified or esterified products thereof, and the like. Examples of the copolymer include an oxypropylene-oxyalkylene copolymer (provided that oxyalkylene is $C_{2-4}$ alkylene other than oxypropylene) and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be referred to as a polyoxypropylene-polyoxyalkylene copolymer (for example, a polyoxypropylene-polyoxyethylene copolymer). The oxypropylene-oxyalkylene copolymer may be a block copolymer (for example, a polyoxypropylene-polyoxyethylene block copolymer). Examples of the etherified product include polypropylene glycol alkyl ether, alkyl ether of an oxypropylene-oxyalkylene copolymer (such as alkyl ether of polyoxypropylene-polyoxyethylene copolymer), and the like. Examples of the esterified product include polypropylene glycol ester of carboxylic acid, carboxylic acid ester of an oxypropylene-oxyalkylene copolymer (such as carboxylic acid ester of polyoxypropylene-polyoxyethylene copolymer), and the like.

Examples of the polymer compound having at least a repeating structure of oxypropylene units include polypropylene glycol, polyoxypropylene-polyoxyethylene copolymers (such as polyoxypropylene-polyoxyethylene block copolymers), polypropylene glycol alkyl ethers (such as alkyl ethers in which $R^2$ is an alkyl having 10 or less (or 8 or less or 6 or less) carbon atoms (such as methyl ether, ethyl ether and butyl ether)), polyoxyethylene-polyoxypropylene alkyl ethers (such as alkyl ethers in which $R^2$ is an alkyl having 10 or less (or 8 or less or 6 or less) carbon atoms (such as butyl ether and hydroxyhexyl ether)), polypropylene glycol carboxylates (such as polypropylene glycol carboxylates in which $R^3$ is an alkyl having 10 or less (or 8 or less or 6 or less) carbon atoms (such as polypropylene glycol acetate), and polypropylene oxide adducts of polyols with three or more hydroxyl groups (such as polypropylene oxide adducts of glycerin), and the like. However, the polymer compound is not limited thereto.

In the polymer compound having a repeating structure of oxypropylene units, the proportion of the oxypropylene unit is, for example, 5 mol% or more, and may be 10 mol% or more or 20 mol% or more. The proportion of the oxypropylene unit is, for example, 100 mol% or less. In the copolymer, the proportion of the oxypropylene unit may be 90 mol% or less, 75 mol% or less, or 60 mol% or less, 50 mol% or less, or 43 mol% or less.

In the polymer compound having a repeating structure of oxypropylene units, the proportion of the oxypropylene unit may be 5 mol% or more and 100 mol% or less (or 90 mol% or less), 10 mol% or more and 100 mol% or less (or 90 mol% or less), 20 mol% or more and 100 mol% or less (or 90 mol% or less), 5 mol% or more and 75 mol% or less (or 60 mol% or less), 10 mol% or more and 75 mol% or less (or 60 mol% or less), 20 mol% or more and 75 mol% or less (or 60 mol% or less), 5 mol% or more and 50 mol% or less (or 43 mol% or less), 10 mol% or more and 50 mol% or less (or 43 mol% or less), or 20 mol% or more and 50 mol% or less (or 43 mol% or less).

It is preferable that the polymer compound contains a large amount of oxy $C_{2-4}$ alkylene units from the viewpoint of enhancing adsorptivity of the polymer compound to lead and making it easy for the polymer compound to have a linear structure. Such a polymer compound includes, for example, an oxygen atom bonded to a terminal group and a -$CH_2$- group and/or a -CH< group bonded to the oxygen atom. In the $^1$H-NMR spectrum of the polymer compound, the ratio of the integrated value of the peak of 3.2 ppm to 3.8 ppm of the integrated value of the peak of 3.2 ppm to 3.8 ppm of the integrated value of the peak of 3.2 ppm to 3.8ppm to the sum of the integrated value of the peak of 3.2 ppm to 3.8 ppm, the integrated value of the peak of the hydrogen atoms of the -$CH_2$- group, and the integrated value of the peak of the hydrogen atom of the -CH< group increases. This ratio is, for example, 50% or more, and may be 80% or more. From the viewpoint of further enhancing the effect of reducing the amount of overcharge and easily securing higher charge acceptability, the above ratio is preferably 85% or more, and more preferably 90% or more. For example, when the polymer compound has an -OH group at a terminal and also has a -$CH_2$-group and/or a -CH< group bonded to an oxygen atom of the -OH group, in the $^1$H-NMR spectrum, the peaks of the hydrogen atoms of the -$CH_2$- group and/or the -CH< group have a chemical shift in a range of more than 3.8 ppm and 4.0 ppm or less.

The negative electrode material may contain one kind or two or more kinds of polymer compounds.

The polymer compound may include, for example, a compound having Mn of 5,000,000 or less, 3,000,000 or less, or 2,000,000 or less, 500,000 or less, or 100,000 or less, or 50,000 or less or 20,000 or less. From the viewpoint of securing higher charge acceptability, the polymer compound preferably contains a compound having Mn of 10,000 or less, may contain 5,000 or less, 4,000 or less, 3,000 or less or 2,500 or less. Mn of such a compound is, for example, 300 or more. From the viewpoint of further enhancing the effect of reducing the amount of overcharge, Mn of such a compound is preferably 400 or more or 500 or more, more preferably 1,000 or more, still more preferably 1,500 or more, or 1800 or more. As the polymer compound, two or more compounds having different Mn may be used. That is, the polymer compound may have a plurality of peaks of Mn in the distribution of the molecular weight.

Mn of the compound may be 300 or more (or 400 or more) and 5,000,000 or less, 300 or more (or 400 or more) and 3,000,000 or less, 300 or more (or 400 or more) and 2,000,000 or less, 300 or more (or 400 or more) and 500,000 or less, 300 or more (or 400 or more) and 100,000 or less, 300 or more (or 400 or more) and 50,000 or less, 300 or more (400 or more) and 20,000 or less, 300 or more (or 400 or more) and 10,000 or less, 300 or more (or 400 or more) and 5,000 or less, 300 or more (or 400 or more) and 4,000 or less, 300 or more (or 400 or more) and 3,000 or less, 300 or more (or 400 or more) and 2,500 or less, 500 or more (or 1,000 or more) and 5,000,000 or less, 500 or more (or 1,000 or more) and 3,000,000 or less, 500 or more (or 1,000 or more) and 2,000,000 or less, 500 or more (or 1,000 or more) and 500,000 or less, 500 or more (or 1,000 or more) and 100,000 or less, 500 or more (or 1,000 or more) and 50,000 or less, 500 or more (or 1,000 or more) and 20,000 or less, 500 or more (or 1,000 or more) and 10,000 or less, 500 or more (or 1,000 or more) and 5,000, 500 or more (or 1,000 or more) and 4,000 or less, 500 or more (or 1,000 or more) and 3,000 or less, 500 or more (or 1,000 or more) and 2,500 or less, 1,500 or more (or 1,800 or more) and 5,000,000 or less, 1,500 or more (or 1,800 or more) and 3,000,000 or less, 1,500 or more (or 1,800 or more) and 2,000,000 or less, 1,500 or more (or 1,800 or more) and 500,000 or less, 1,500 or more (or 1,800 or more) and 100,000 or less, 1,500 or more (or 1,800 or more) and 50,000 or less, 1,500 or more (or 1,800 or more) and 20,000 or less, 1,500 or more (or 1,800 or more) and 10,000 or less, 1,500 or more (or 1,800 or more) and 5,000 or less, 1,500 or more (or 1,800 or more) and 4,000 or less, 1,500 or more (or 1,800 or more) and 3,000 or less, or 1,500 or more (or 1,800 or more) and 2,500 or less.

The content of the polymer compound in the negative electrode material is, for example, 8 ppm or more and may be 10 ppm or more on a mass basis. From the viewpoint of further enhancing the effect of reducing the amount of overcharge, the content of the polymer compound in the negative electrode material is preferably 20 ppm or more, more preferably 30 ppm or more on a mass basis. The content of the polymer compound in the negative electrode material is, for example, 1,000 ppm or less, may be less than 1,000 ppm, 700 ppm or less, 600 ppm or less, or 500 ppm or less on a mass basis. From the viewpoint of easily securing higher charge acceptability, the content of the polymer compound in the negative electrode material is preferably 400 ppm or less, more preferably 300 ppm or less, 200 ppm or less, 160 ppm or less, 150 ppm or less, 120 ppm or less, or 100 ppm or less on a mass basis.

The content of the polymer compound in the negative electrode material (on a mass basis) may be 8 ppm or more (or 10 ppm or more) and 1,000 ppm or less, 8 ppm or more (or 10 ppm or more) and less than 1,000 ppm, 8 ppm or more (or 10 ppm or more) and 700 ppm or less, 8 ppm or more (or 10 ppm or more) and 600 ppm or less, 8 ppm or more (or 10 ppm or more) and 500 ppm or less, 8 ppm or more (or 10 ppm or more) and or 400 ppm or less, 8 ppm or more (or 10 ppm or more) and 300 ppm or less, 8 ppm or more (or 10 ppm or more) and 200 ppm or less, 8 ppm or more (or 10 ppm or more) and 160 ppm or less, 8 ppm or more (or 10 ppm or more) and 150 ppm or less, 8 ppm or more (or 10 ppm or more) and 120 ppm or less, 8 ppm or more (or 10 ppm or more) and 100 ppm or less, 20 ppm or more (or 30 ppm or more) and 1,000 ppm or less, 20 ppm or more (or 30 ppm or more) and less than 1,000 ppm, 20 ppm or more (or 30 ppm or more) and 700 ppm or less, 20 ppm or more (or 30 ppm or more) and 600 ppm or less, 20 ppm or more (or 30 ppm or more) and 500 ppm or less, 20 ppm or more (or 30 ppm or more) and 400 ppm or less, 20 ppm or more (or 30 ppm or more) and 300 ppm or less, 20 ppm or more (or 30 ppm or more) and 200 ppm or less, 20 ppm or more (or 30 ppm or more) and 160 ppm or less, 20 ppm or more (or 30 ppm or more) and 150 ppm or less, 20 ppm or more (or 30 ppm or more) and 120 ppm or less, or 20 ppm or more (or 30 ppm or more) and 100 ppm.

(Organic expander)

The organic expanders are generally roughly classified into lignin compounds and synthetic organic expanders. It can also be said that the synthetic organic expander is an organic expander other than lignin compounds. Examples of the organic expander contained in the negative electrode material include a lignin compound, a synthetic organic expander, and the like. The negative electrode material may contain one kind or two or more kinds of organic expanders.

Examples of the lignin compounds include lignin, lignin derivatives, and the like. Examples of the lignin derivative include lignin sulfonic acid or salts thereof (such as alkali metal salts (sodium salts and the like)), and the like.

The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt.

At least a lignin compound may be used as the organic expander. Charge acceptability tends to be lower when a lignin compound is used than when a synthetic organic expander is used. However, when the average pore size of the negative electrode material is reduced and the negative electrode material contains a specific polymer compound, high charge acceptability can be secured even if a lignin compound is used as the organic expander.

As the organic expander, the case of using a condensate containing at least a unit of an aromatic compound is also preferable. Examples of such a condensate include a condensate of an aromatic compound with an aldehyde compound (such as at least one selected from the group consisting of aldehydes (for example, formaldehyde) and condensates thereof). The organic expander may contain a unit of one kind of an aromatic compound or a unit of two or more kinds of aromatic compounds. Note that the unit of an aromatic compound refers to a unit derived from an aromatic compound incorporated in a condensate.

Examples of the aromatic ring of the aromatic compound include a benzene ring, a naphthalene ring, and the like. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (biphenyl, bisphenylalkane, bisphenylsulfone, and the like). Examples of the aromatic compound include compounds having the aromatic ring, and at least one selected from the group consisting of a hydroxy group and an amino group. The hydroxy group or the amino group may be directly bonded to the aromatic ring, or may be bonded as an alkyl chain having a hydroxy group or an amino group. Note that the hydroxy group also includes salts of hydroxy group (-OMe). The amino group also includes salts of an amino group (specifically, salts with anions). Examples of Me include alkali metals (Li, K, Na, and the like), Group 2 metals of the periodic table (Ca, Mg, and the like), and the like.

As the aromatic compound, bisarene compounds [bisphenol compounds, hydroxybiphenyl compounds, bisarene compounds having an amino group (bisarylalkane compounds having an amino group, bisarylsulfone compounds having an amino group, biphenyl compounds having an amino group, and the like), hydroxyarene compounds (hydroxynaphthalene compounds, phenol compounds, and the like), aminoarene compounds (aminonaphthalene compounds, aniline compounds (aminobenzenesulfonic acid, alkylaminobenzenesulfonic acid, and the like), and the like), and the like] are preferable. The aromatic compound may further have a substituent. The organic expander may contain one or more or a plurality of residues of these compounds. As the bisphenol compound, bisphenol A, bisphenol S, bisphenol F, and the like are preferable. As the organic expander, a condensate of a bisarene compound may be used.

The condensate preferably contains a unit of an aromatic compound having at least a sulfur-containing group. In particular, use of a condensate containing at least a unit of a bisphenol compound having a sulfur-containing group is advantage in securing higher charge acceptability. From the viewpoint of enhancing the effect of reducing the amount of overcharge, it is also preferable to use a condensate from an aldehyde compound of a naphthalene compound having at least one selected from the group consisting of a hydroxy group and an amino group with a sulfur-containing group.

The sulfur-containing group may be directly bonded to the aromatic ring contained in the compound, and for example, may be bonded to the aromatic ring as an alkyl chain having a sulfur-containing group. The sulfur-containing group is not particularly limited, and examples thereof include a sulfonyl group, a sulfonic acid group or a salt thereof, and the like.

In addition, as the organic expander, for example, at least a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable.

The negative electrode material may contain, for example, the organic expander (first organic expander) having a sulfur element content of 2,000 pmol/g or more among the organic expanders. Examples of the first organic expander include the synthetic organic expander describe above (such as the condensate).

The sulfur element content of the first organic expander may be 2,000 pmol/g or more, and is preferably 3,000 pmol/g or more. The upper limit of the content of the sulfur element in the first organic expander is not particularly limited, and is preferably 9,000 pmol/g or less, more preferably 8,000 pmol/g or less, from the viewpoint of further enhancing the effect of reducing the amount of overcharge.

The content of the sulfur element in the first organic expander may be, for example, 2,000 pmol/g or more (or 3,000 pmol/g or more) and 9,000 pmol/g or less, or 2,000 pmol/g or more (or 3,000 pmol/g or more) and 8,000 pmol/g or less.

The first organic expander may contain a condensate containing a unit of an aromatic compound having a sulfur-containing group, and the condensate may contain at least a unit of a bisphenol compound as the unit of the aromatic compound.

A weight average molecular weight (Mw) of the first organic expander is preferably 7,000 or more. The Mw of the first organic expander is, for example, 100,000 or less, and may be 20,000 or less.

The negative electrode material can contain, for example, the organic expander (second organic expander) having a sulfur element content of less than 2,000 pmol/g. Examples of the second organic expander include lignin compounds, and synthetic organic expanders (in particular, lignin compounds) among the organic expanders described above. The sulfur element content of the second organic expander is preferably 1,000 pmol/g or less, and may be 800 pmol/g or less. The lower limit of the sulfur element content in the second organic expander is not particularly limited, and is, for example, 400 pmol/g or more.

The Mw of the second organic expander is, for example, less than 7,000. The Mw of the second organic expander is, for example, 3,000 or more.

The negative electrode material may contain the second organic expander in addition to the first organic expander. When the first organic expander and the second organic expander are used in combination, the mass ratio thereof can be arbitrarily selected.

The content of the organic expander contained in the negative electrode material is, for example, 0.005 mass% or more and may be 0.01 mass% or more. When the content of the organic expander is in such a range, a high low-temperature high-rate discharge capacity can be secured. The content of the organic expander is, for example, 1.0 mass% or less and may be 0.5 mass% or less. From the viewpoint of further enhancing the effect of suppressing the deterioration of the charge acceptability, the content of the organic expander is preferably 0.3 mass% or less, more preferably 0.25 mass% or less, still more preferably 0.2 mass% or less or 0.15 mass% or less, and may be 0.12 mass% or less.

The content of the organic expander contained in the negative electrode material may be 0.005 mass% or more (or 0.01 mass% or more) and 1.0 mass% or less, 0.005 mass% or more (or 0.01 mass% or more) and 0.5 mass% or less, 0.005 mass% or more (or 0.01 mass% or more) and 0.3 mass% or less, 0.005 mass% or more (or 0.01 mass% or more) and 0.25 mass% or less, 0.005 mass% or more (or 0.01 mass% or more) and 0.2 mass% or less, 0.005 mass% or more (or 0.01 mass% or more) and 0.15 mass% or less, or 0.005 mass% or more (or 0.01 mass% or more) and 0.12 mass% or less.

(Carbonaceous material)

As the carbonaceous material contained in the negative electrode material, carbon black, graphite, hard carbon, soft carbon, and the like can be used. Examples of the carbon black include acetylene black, furnace black, and lamp black. Furnace black also includes Ketjen black (product name). The graphite may be a carbonaceous material including a graphitetype crystal structure and may be either artificial graphite or natural graphite. The negative electrode material may contain one kind or two or more kinds of carbonaceous materials.

The content of the carbonaceous material in the negative electrode material is, for example, 0.05 mass% or more and may be 0.10 mass% or more. The content of the carbonaceous material is, for example, 5 mass% or less and may be 3 mass% or less.

The content of the carbonaceous material in the negative electrode material may be 0.05 mass% or more and 5 mass% or less, 0.05 mass% or more and 3 mass% or less, 0.10 mass% or more and 5 mass% or less, or 0.10 mass% or more and 3 mass% or less.

(Barium sulfate)

The content of barium sulfate in the negative electrode material is, for example, 0.05 mass% or more and may be 0.10 mass% or more. The content of barium sulfate in the negative electrode material is, for example, 3 mass% or less and may be 2 mass% or less.

The content of barium sulfate in the negative electrode material may be 0.05 mass% or more and 3 mass% or less, 0.05 mass% or more and 2 mass% or less, 0.10 mass% or more and 3 mass% or less, or 0.10 mass% or more and 2 mass% or less.

(Measurement of average pore size and bulk density of negative electrode material and analysis of negative electrode material or components)

Methods for measuring the average pore size and the bulk density of the negative electrode material and a method for analyzing the negative electrode material or constituent components thereof will be described below. Before measurement or analysis, the lead-acid battery in the fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed by peeling. Next, the negative electrode material is separated from the negative electrode plate to obtain a sample (hereinafter referred to as sample A). The sample A is ground as necessary and subjected to analysis.

(1) Measurement of average pore size

For unground sample A, an average pore size is measured by a mercury intrusion method. More specifically, the integrated pore volume distribution of sample A is measured by using a mercury porosimeter, and the relationship between the pore diameter and the integrated pore volume is determined. A pore diameter corresponding to the median value of the integrated pore volume is determined. The pore diameter (i.e. volume median pore diameter) is defined as a median diameter (average pore size) in a pore distribution on a volume basis. The pressure for the measurement is in the range of 0.05 psia or more and 30,000 psia or less (□ 0.345 kPa or more and 20,700 kPa or less). The pore distribution is determined for the pore diameter range of 17 nm or more and 340 pm or less. As the mercury porosimeter, an automatic porosimeter (AutoPore IV 9505) manufactured by Shimadzu Corporation is used.

(2) Measurement of bulk density of negative electrode material

The bulk density of unground sample A is determined by a mercury intrusion method using a mercury porosimeter. Unground sample A used for measuring the bulk density is taken from the vicinity of the negative electrode plate in the plane direction. The measurement of the bulk density will be described in more detail. A predetermined amount of unground sample A is taken, and the mass thereof is measured. The sample A is charged into a measurement container of a mercury porosimeter, evacuated under reduced pressure, and then filled with mercury at a pressure of 0.5 psia or more and 0.55 psia or less ($\approx$ 3.45 kPa or more and 3.79 kPa or less) to measure a bulk volume of sample A and the measured mass of sample A is divided by the bulk volume to determine the bulk density of the negative electrode material. A volume obtained by subtracting a mercury injection volume from a volume of the measurement container is defined as the bulk volume. As the mercury porosimeter, an automatic porosimeter (AutoPore IV 9505) manufactured by Shimadzu Corporation is used. When the element includes one negative electrode plate, the density of the negative electrode material is determined for a negative electrode material taken from the negative electrode plate. When the element includes two negative electrode plates, the density of the negative electrode material is an average of values determined for negative electrode materials taken from two negative electrode plates, respectively. When the element includes three or more negative electrode plates, the density of the negative electrode material is an average of values determined for negative electrode materials taken from two negative electrode plates arbitrarily selected from negative electrode plates other than the plates at both ends of the element. It is to be noted that when two of the three negative electrode plates are plates at both ends of the element, the density of the negative electrode material is determined for a negative electrode material taken from the remaining one negative electrode plate.

(3) Analysis of polymer compound

(3-1) Qualitative analysis of polymer compound

(a) Analysis of oxy $C_{2-4}$ alkylene unit

Ground sample A is used. 150.0 $\pm$ 0.1 mL of chloroform is added to 100.0 $\pm$ 0.1 g of the sample A, and the mixture is stirred at 20 $\pm$ 5°C for sixteen hours to extract the polymer compound. Thereafter, the solid is removed by filtration. For a chloroform solution in which the polymer compound obtained by the extraction is dissolved or the polymer compound obtained by drying the chloroform solution, information is obtained from at least one selected from an infrared spectroscopic spectrum, an ultravioletvisible absorption spectrum, an NMR spectrum, and LC-MS and pyrolysis GC-MS to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.

Observation frequency: 395.88 MHz
Pulse width: 6.30 ps
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the $-CH_2-$ group and the $-CH<$ group bonded to the oxygen atom bonded to the terminal group of the polymer compound, the sum ($V_2$) of integrated values of peaks in the $^1$H-NMR spectrum is determined. Then, from $V_1$ and $V_2$, a ratio of $V_1$ to the sum of $V_1$ and $V_2$ ($= V_1/(V_1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in a range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(b) Analysis of hydrophobic group in esterified product

When the polymer compound is an esterified product of a hydroxy compound, a predetermined amount of the polymer compound obtained by drying a chloroform solution in which the polymer compound obtained by extraction is dissolved in (a) is taken, and an aqueous potassium hydroxide solution is added. This saponifies the esterified product to generate a fatty acid potassium salt and a hydroxy compound. The water soluble aqueous potassium solution is added until completion of the saponification. To the resulting mixture, methanol and a solution of boron trifluoride are added, and the mixture is stirred to convert the fatty acid potassium salt into fatty acid methyl ester. The resulting mixture is analyzed by pyrolysis GC-MS under the following conditions to identify a hydrophobic group contained in the esterified product.

Analyzer: high-performance general-purpose gas chromatogram GC-2014 manufactured by Shimadzu Corporation
Column: DEGS (diethylene glycol succinic acid ester) 2.1 m
Oven temperature: 180 to 120°C
Inlet temperature: 240°C
Detector temperature: 240°C
Carrier gas: He (flow rate: 50 mL/min)
Injection amount: 1 pL to 2 pL

(c) Analysis of hydrophobic group in etherified product

When the polymer compound is an etherified product of a hydroxy compound, a predetermined amount of the polymer compound obtained by drying a chloroform solution in which the polymer compound obtained by extraction is dissolved in (a) is taken, and hydrogen iodide is added. This generates an iodide ($R^3I$) corresponding to the organic group of the ether moiety of the polymer compound ($R^3$ described above), and also produces a diiodo $C_{2-4}$ alkane corresponding to the oxy $C_{2-4}$ alkylene unit. The hydrogen iodide is added in an amount sufficient to complete conversion of the etherified to the iodide and the diiodo $C_{2-4}$ alkane. The resulting mixture is analyzed by pyrolysis GC-MS under the same conditions as in (b) to identify a hydrophobic group present in the etherified product.

(3-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1,000,000$$

wherein $M_a$ is a molecular weight of a structure showing a peak in a chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.

Since the reference substance in this analysis is TCE, $N_r = 2$ and $M_r = 168$. In addition, m = 100.

For example, when the polymer compound is polypropylene glycol, $M_a$ is 58, and $N_a$ is 3. When the polymer compound is polyethylene glycol, $M_a$ is 44, and $N_a$ is 4. In the case of a copolymer, $N_a$ and $M_a$ are values obtained by averaging $N_a$ values and $M_a$ values, respectively, of each monomer unit using a molar ratio (mol%) of each monomer unit contained in the repeating structure.

In the quantitative analysis, the integrated value of the peak in the $^1$H-NMR spectrum is determined using data processing software "ALICE" manufactured by JEOL Ltd.

(3-3) Measurement of Mn of polymer compound

Using the chloroform soluble component, GPC measurement of the polymer compound is performed under the following conditions using the following apparatuses. Separately, a calibration curve (standard curve) is prepared from a plot of Mn of the standard substance and elution time. The Mn of the polymer compound is calculated based on the standard curve and the GPC measurement result of the polymer compound. However, the esterified product, the etherified product, and the like may be decomposed in the chloroform soluble component.

Analysis system: 20A system (manufactured by Shimadzu Corporation)

Column: two columns of GPC KF-805L (manufactured by Shodex) connected in series
Temperature: 30°C $\pm$ 1°C
Mobile phase: tetrahydrofuran
Flow rate: 1 mL/min.
Concentration: 0.20 mass%
Injection amount: 10 pL
Standard substance: polyethylene glycol (Mn = 2,000,000, 200,000, 20,000, 2,000, 200)
Detector: differential refractive index detector (Shodex RI-201H, manufactured by Shodex)

(4) Analysis of organic expander

(4-1) Qualitative analysis of organic expander in negative electrode material

The pulverized sample A is immersed in a 1 mol/L sodium hydroxide aqueous solution to extract the organic expander. Next, the first organic expander and the second organic expander are separated from the extract if necessary. For each separated material containing each organic expander, insoluble components are removed by filtration, and the obtained solution is desalted, then concentrated, and dried. The desalination is performed by using a desalination column, by causing the solution to pass through an ionexchange membrane, or by placing the solution in a dialysis tube and immersing the solution in distilled water. The solution is dried to obtain a powder sample (hereinafter, referred to as a sample B) of the organic expander.

A type of the organic expander is determined from a combination of information obtained from, for example, an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, or pyrolysis GC-MS enabling acquirement of information of individual compounds forming a substance.

The first organic expander and the second organic expander are separated from the extract as follows. First, the extract is measured by infrared spectroscopy, NMR, and/or GC-MS to determine whether or not a plurality of types of organic expanders are contained. Next, a molecular weight distribution is measured by GPC analysis of the extract, and if the plurality of types of organic expanders can be separated by molecular weight, the organic expander is separated by column chromatography based on a difference in molecular weight. When it is difficult to separate the organic expander due to the difference in molecular weight, one of the organic expanders is separated by a precipitation separation method using a difference in solubility that varies depending on the type of the functional group and/or the amount of the functional group of the organic expander. Specifically, an aqueous sulfuric acid solution is added dropwise to a mixture obtained by dissolving the extract in an NaOH aqueous solution to adjust the pH of the mixture, thereby aggregating and separating one of the organic expanders. The insoluble component is removed by filtration as described above from a mixture obtained by dissolving the separated material again in the NaOH aqueous solution. The remaining solution after separating one of the organic expanders is concentrated. The obtained concentrate contains the other organic expander, and the insoluble component is removed from the concentrate by filtration as described above.

(4-2) Quantitative determination of content of organic expander in negative electrode material

As in (4-1), for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using the organic expander extracted from the negative electrode of the battery and a separately available organic polymer in which the ultraviolet-visible absorption spectrum, the infrared spectroscopic spectrum, the NMR spectrum, and the like exhibit similar shapes.

(4-3) Content of sulfur element in organic expander

As in (4-1), after the sample B of the organic expander is obtained, sulfur element in 0.1 g of the organic expander is converted into sulfuric acid by an oxygen combustion flask method. At this time, the sample B is burned in a flask containing an adsorbent to obtain an eluate in which sulfate ions are dissolved in the adsorbent. Next, the eluate is titrated with barium perchlorate using thorin as an indicator to determine the content (c1) of the sulfur element in 0.1 g of the organic expander. Next, c1 is multiplied by 10 to calculate the content ($\mu$mol/g) of the sulfur element in the organic expander per 1 g.

(4-4) Measurement of Mw of organic expander

As in the above (4-1), sample B of an organic expander is obtained, GPC measurement of the organic expander is performed under the following conditions using the following apparatus. Separately, a calibration curve (standard curve) is prepared from a plot of Mw of the standard substance and elution time. The Mw of the organic expander is calculated on the basis of the standard curve and the GPC measurement result of the organic expander.

GPC apparatus: Build-up GPC system SD-8022/DP-8020/AS-8020/CO-8020/UV-8020 (manufactured by Tosoh Corporation)
Column: TSKgel G4000SWXL, G2000SWXL (7.8 mm I.D. × 30 cm) (manufactured by Tosoh Corporation)
Detector: UV detector, $\lambda$ = 210 nm
Eluent: Mixed solution of NaCl aqueous solution having a concentration of 1 mol/L: acetonitrile (volume ratio = 7:3)
Flow rate: 1 mL/min.
Concentration: 10 mg/mL
Injection amount: 10 pL
Standard substance: Na polystyrene sulfonate (Mw = 275,000, 35,000, 12,500, 7,500, 5,200, 1,680)

(5) Quantitative determination of carbonaceous material and barium sulfate

To 10 g of the ground sample A, 50 ml of nitric acid having a concentration of 20 mass% is added and heated for about twenty minutes to dissolve the lead component as lead ions. The resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of the carbonaceous material and barium sulfate. The mass of the membrane filter is subtracted from the total mass of the mixed sample (hereinafter, referred to as sample C) and the membrane filter after drying to measure the mass of sample C ($M_m$). Thereafter, sample C is placed in a crucible together with a membrane filter and is burned and incinerated at 1,300°C or higher. The residue remaining is barium oxide. The mass of barium sulfate ($M_B$) is determined by converting the mass of barium oxide to the mass of barium sulfate. The mass of the carbonaceous material is calculated by subtracting the mass $M_B$ from the mass $M_m$.

(Others)

The negative electrode plate can be formed in such a manner that a negative current collector is coated or filled with a negative electrode paste, which is then cured and dried to fabricate a non-formed negative electrode plate, and thereafter, the non-formed negative electrode plate is formed. The negative electrode paste is prepared, for example, by adding water and sulfuric acid (or sulfuric acid aqueous solution) to a lead powder, the polymer compound, and if necessary, at least one selected from the group consisting of an organic expander, a carbonaceous material, and other additives, and mixing the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

The positive electrode plate of a lead-acid battery can be classified into a paste type, a clad type, and the like. Either a paste-type or a clad-type positive electrode plate may be used. The paste-type positive electrode plate includes a positive current collector and a positive electrode material. The configuration of the clad-type positive electrode plate is as described above.

The positive current collector may be formed by casting lead (Pb) or a lead alloy, or may be formed by processing a lead sheet or a lead alloy sheet. Examples of the processing method include expanding processing and punching processing. It is preferable to use a grid-shaped current collector as the positive electrode current collector because the positive electrode material is easy to support.

As a lead alloy used for the positive current collector, a Pb-Sb alloy, a Pb-Ca alloy, or a Pb-Ca-Sn alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid part, only on the lug part, or only on the frame rib part of the positive current collector.

The positive electrode material contained in the positive electrode plate contains a positive active material (lead dioxide or lead sulfate) that exhibits a capacity through a redox reaction. The positive electrode material may optionally contain another additive.

A non-formed paste-type positive electrode plate is obtained by filling a positive current collector with a positive electrode paste, and curing and drying the paste. The positive electrode paste is prepared by mixing lead powder, an additive, water, and sulfuric acid. A non-formed clad-type positive electrode plate is formed by filling a porous tube, into which a spine connected by a current collector is inserted with a lead powder or a slurry-like lead powder, and joining a plurality of tubes with a spine protector. Thereafter, the positive electrode plate is obtained by forming the non-formed positive electrode plates.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

(Separator)

The separator can be disposed between the negative electrode plate and the positive electrode plate. As the separator, at least one selected from a nonwoven fabric and a microporous membrane, and the like are used.

The nonwoven fabric is a mat in which fibers are intertwined without being woven and is mainly made of fibers. In the nonwoven fabric, for example, 60 mass% or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among them, glass fibers are preferable. The nonwoven fabric may contain components other than the fibers (for example, an acid resistant inorganic powder and a polymer as a binder) and the like.

On the other hand, the microporous membrane is a porous sheet mainly made of components except for fiber components and is obtained by, for example, extrusion molding a composition containing, a pore-forming additive into a sheet shape and then removing the pore-forming additive to form pores. The microporous membrane is preferably formed of a material having acid resistance, and is preferably a microporous membrane composed mainly of a polymer component. As the polymer component, a polyolefin (a polyethylene, a polypropylene, etc.) is preferable. Examples of the pore-forming additive include at least one selected from the group consisting of a polymer powder and oil.

The separator may be, for example, made of only a nonwoven fabric or made of only a microporous membrane. The separator may be, when required, a laminate of a nonwoven fabric and a microporous membrane, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the fold part may be parallel to the horizontal direction), and the separator may be disposed such that the folded part is along the vertical direction (e.g., such that the fold part is parallel to the vertical direction). In the separator folded in the bellows shape, recesses are alternately formed on both main surface sides of the separator. Since the lug parts are usually formed on the upper part of the positive electrode plate and the negative electrode plate, when the separator is disposed such that the folded parts are along the horizontal direction of the lead-acid battery, the positive electrode plate and the negative electrode plate are each disposed only in the recess on one main surface side of the separator (i.e., a double separator is interposed between the adjacent positive electrode plate and negative electrode plate). When the separator is disposed such that the folded part is along the vertical direction of the lead-acid battery, the positive electrode plate can be housed in the recess on one main surface side, and the negative electrode plate can be housed in the recess on the other main surface side (i.e., the separator can be interposed singly between the adjacent positive electrode plate and negative electrode plate). When the bag-shaped separator is used, the bag-shaped separator may house the positive electrode plate or may house the negative electrode plate.

(Electrolyte solution)

The electrolyte solution is an aqueous solution containing sulfuric acid and may be gelled as necessary. The polymer compound may be contained in the electrolyte solution.

The electrolyte solution may contain cations (for example, metal cations) and/or anions (for example, anions other than sulfate anions (such as phosphate ions)) if necessary. Examples of the metal cation include at least one selected from the group consisting of a Na ion, a Li ion, a Mg ion, and an Al ion.

The specific gravity of the electrolyte solution in the lead-acid battery in a fully charged state at 20°C is, for example, 1.20 or more and may be 1.25 or more. The specific gravity of the electrolyte solution at 20°C is 1.35 or less and preferably 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

(Others)

The lead-acid battery can be obtained by a manufacturing method including a step of storing an element and an electrolyte solution in a cell chamber of a container. Each cell of the lead-acid battery includes an element and an electrolyte solution stored in each cell chamber. The element is assembled by stacking a positive electrode plate, a negative electrode plate, and a separator such that the separator is interposed between the positive electrode plate and the negative electrode plate prior to storage in the cell chamber. The positive electrode plate, the negative electrode plate, the electrolyte solution, and the separator are each prepared prior to assembly of the element. A method of manufacturing the lead-acid battery may include a step of forming at least one of the positive electrode plate and the negative electrode plate as necessary after a step of storing the element and the electrolyte solution in the cell chamber.

The number of plates in the element may be one or two or more. When at least one negative electrode plate, in the case where the element includes two or more negative electrode plates, satisfies the condition that the average pore size of the negative electrode material is in the above-described range and the negative electrode material contains the organic expander and the polymer compound, an effect of suppressing the deterioration of the charge acceptability is obtained for this negative electrode plate, and the effect of reducing the amount of overcharge depends on the number of such negative electrode plates. From the viewpoint of further suppressing the deterioration of the charge acceptability and securing a high effect of reducing the amount of overcharge, it is preferable that 50% or more (more preferably 80% or more or 90% or more) of the number of negative electrode plates in the element satisfy the above-described condition. Among the negative electrode plates in the element, a ratio of the negative electrode plates satisfying the above condition is 100% or less. All negative electrode plates included in the element may satisfy the above condition.

When the lead-acid battery has two or more cells, the elements of at least some cells may have the negative electrode plate satisfying the condition as described above. From the viewpoint of further suppressing the deterioration of the charge acceptability and securing a high effect of reducing the amount of overcharge, it is preferable to provide an element including a negative electrode plate in which 50% or more (more preferably 80% or more or 90% or more) of the number of cells in the lead-acid battery satisfy the above-described condition. Among the cells included in the lead-acid battery, a ratio of the cells including the element including the negative electrode plate satisfying the above condition is 100% or less. It is preferable that all elements in the lead-acid battery include the negative electrode plate satisfying the above condition.

Fig. 1 shows an appearance of an example of a lead-acid battery according to an embodiment of the present invention. A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 housing the negative electrode plate 2 is illustrated, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each penetrating connection body 8 passes through a through-hole made in the partition 13 to connect the elements 11 of the adjacent cell chambers 14 in series.

The positive electrode shelf 5 is formed by welding the lug parts, provided on the upper parts of the respective positive electrode plates 3, to each other by a cast-on-strap method or a burning method. The negative electrode shelf 6 is also formed by welding the lug parts, provided on the upper parts of the respective negative electrode plates 2, to each other in accordance with the case of the positive electrode shelf 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

In the present specification, the amount of overcharge and charge acceptability are evaluated by the following procedures, respectively. A test battery used for the evaluation has a rated voltage of 2 V/cell and a rated five-hour rate capacity of 32 Ah.

(a) Amount of overcharge

Using the test battery, evaluation is performed under the following conditions.

In order to set a more overcharge condition than the normal 4-10 min test specified in JIS D 5301: 2019, a test of one minute of discharge and ten minutes of charge (1-10 min test) is performed at 75°C $\pm$ 3°C (high temperature light load test). 1220 cycles of charge-discharge is repeated in the high temperature light load test. The amount of overcharge (amount of charge-discharge capacity) in each cycle up to 1220 cycles is summed to determine the integrated value of the amount of overcharge (Ah), and the amount of overcharge is evaluated on the basis of this integrated value.

    Discharge: 25 A, one minute
    Charge: 2.47 V/cell, 25 A, ten minutes
    Water bath temperature: 75°C $\pm$ 3°C

(b) Charge acceptability

A 10 second electric quantity is measured using the test battery after full charge. Specifically, the test battery is discharged at 6.4 A for thirty minutes and left for sixteen hours. Thereafter, the test battery is subjected to constant current constant voltage charge at 2.42 V/cell while the upper limit of the current is 200 A, and an integrated electric quantity for ten seconds (electric quantity at ten seconds) at this time is measured. Both operations are performed in a water bath at 25°C $\pm$ 2°C. Charge acceptability is evaluated on the basis of the amount of electricity at ten seconds.

The lead-acid battery according to one aspect of the present invention will be described below.

    (1) A lead-acid battery including at least one cell including an element and an electrolyte solution, wherein

        the element includes a negative electrode plate, a positive electrode plate, and a separator interposed between the negative electrode plate and the positive electrode plate,

the negative electrode plate includes a negative electrode material,

the negative electrode material contains an organic expander, and a polymer compound having a peak in a range of 3.2 ppm or more and 3.8 ppm or less in a chemical shift of a $^1$H-NMR spectrum measured using deuterated chloroform as a solvent, and

a median diameter (average pore size) of the negative electrode material in a pore distribution on a volume basis is 2.15 pm or less.

(2) In (1), the polymer compound may contain an oxygen atom bonded to a terminal group and a -CH$_2$- group and/or a -CH< group bonded to the oxygen atom, and in the $^1$H-NMR spectrum, a ratio of an integrated value of the peak to a sum of the integrated value of the peak, an integrated value of a peak of a hydrogen atom of the -CH$_2$- group, and an integrated value of a peak of a hydrogen atom of the -CH< group may be 50% or more, 80% or more, 85% or more, or 90% or more.

(3) In (1) or (2), the polymer compound may have a repeating structure of oxy C$_{2-4}$ alkylene units.

(4) A lead-acid battery including at least one cell including an element and an electrolyte solution, wherein

the element includes a negative electrode plate, a positive electrode plate, and a separator interposed between the negative electrode plate and the positive electrode plate,

the negative electrode plate includes a negative electrode material,

the negative electrode material contains an organic expander, and a polymer compound having a repeating structure of oxy C$_{2-4}$ alkylene units, and

a median diameter (average pore size) of the negative electrode material in a pore distribution on a volume basis is 2.15 pm or less.

(5) In any one of (1) to (4), the average pore size of the negative electrode material may be 2.11 pm or less.

(6) In any one of (1) to (5), the average pore size of the negative electrode material may be 0.95 pm or more, 0.99 pm or more, or 1 pm or more.

(7) In any one of (1) to (6), a bulk density of the negative electrode material may be 3.6 g/cm$^3$ or more, 3.7 g/cm$^3$ or more, 3.8 g/cm$^3$ or more, or 4.0 g/cm$^3$ or more.

(8) In any one of (1) to (7), a bulk density of the negative electrode material may be 5.5 g/cm$^3$ or less, or 5 g/cm$^3$ or less.

(9) In any one of (1) to (8), the polymer compound may contain a compound having Mn of 5,000,000 or less, 3,000,000 or less, 2,000,000 or less, 500,000 or less, 100,000 or less, 50,000 or less, 20,000 or less, 10,000 or less, 5,000 or less, 4,000 or less, 3,000 or less, or 2,500 or less.

(10) In any one of (1) to (9), the polymer compound may contain a compound having Mn of 300 or more, 400 or more, 500 or more, 1,000 or more, 1,500 or more, or 1,800 or more.

(11) In any one of (1) to (10), the polymer compound may contain at least one selected from a group consisting of a hydroxy compound having a repeating structure of oxy C$_{2-4}$ alkylene units, an etherified product of the hydroxy compound and an esterified product of the hydroxy compound, and

the hydroxy compound may be at least one selected from a group consisting of a poly C$_{2-4}$ alkylene glycol, a copolymer having a repeating structure of oxy C$_{2-4}$ alkylene, and a poly C$_{2-4}$ alkylene oxide adduct of a polyol.

(12) In any one of (1) to (11), the polymer compound may have a repeating structure of oxypropylene units.

(13) In (12), the polymer compound may include at least one selected from a group consisting of polypropylene glycol, polyoxypropylene-polyoxyethylene copolymer (such as polyoxypropylene-polyoxyethylene block copolymer), polypropylene glycol alkyl ether (such as alkyl ether in which R$^2$ is an alkyl having 10 or less (or 8 or less or 6 or less) carbon atoms (such as methyl ether, ethyl ether and butyl ether)), polyoxyethylene-polyoxypropylene alkyl ether (such as alkyl ether in which R$^2$ is an alkyl having 10 or less (or 8 or less or 6 or less) carbon atoms (such as butyl ether and hydroxyhexyl ether)), polypropylene glycol carboxylate (such as polypropylene glycol carboxylate in which R$^3$ is an alkyl having 10 or less (or 8 or less or 6 or less) carbon atoms (such as polypropylene glycol acetate)), polypropylene oxide adduct of polyol with three or more hydroxyl groups (such as polypropylene oxide adduct of glycerin), and the like.

(14) In (12) or (13), a proportion of the oxypropylene unit in the polymer compound may be 5 mol% or more, 10 mol% or more, or 20 mol% or more.

(15) In any one of (12) to (14), a proportion of the oxypropylene unit in the polymer compound may be 100 mol% or less, 90 mol% or less, 75 mol% or less, 60 mol% or less, 50 mol% or less, or 43 mol% or less.

(16) In any one of (1) to (11), the polymer compound may have one or more hydrophobic groups, and at least one of the hydrophobic groups may be a long-chain aliphatic hydrocarbon group having 8 or more carbon atoms.

(17) In (16), the number of carbon atoms in the long-chain aliphatic hydrocarbon group may be 12 or more, or 16 or more.

(18) In (16) or (17), the number of carbon atoms in the long-chain aliphatic hydrocarbon group may be 30 or less, 26 or less, or 22 or less.

(19) In any one of (11) and (16) to (18), the polymer compound may have a repeating structure of an oxyethylene units.

(20) In (19), the polymer compound may include at least one selected from the group consisting of an etherified product of polyethylene glycol (alkyl ether or the like), an esterified product of polyethylene glycol (carboxylic acid ester or the like), an etherified product of a polyethylene oxide adduct of the polyol (alkyl ether or the like), and an esterified product of a polyethylene oxide adduct of a polyol (polyol with three or more hydroxyl groups) (carboxylic acid ester or the like).

(21) In (19) or (20), the polymer compound may include at least one selected from the group consisting of polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether and polyoxyethylene cetyl ether.

(22) In any one of (19) to (21), HLB of the polymer compound may be 4 or more, or 4.3 or more.

(23) In any one of (19) to (22), HLB of the polymer compound may be 18 or less, 10 or less, 9 or less, or 8.5 or less.

(24) In any one of (1) to (23), a content of the polymer compound in the negative electrode material may be 8 ppm or more, 10 ppm or more, 20 ppm or more, or 30 ppm or more on a mass basis.

(25) In any one of (1) to (24), a content of the polymer compound in the negative electrode material may be 1,000 ppm or less, less than 1,000 ppm, 700 ppm or less, 600 ppm or less, 500 ppm or less, 400 ppm or less, 300 ppm or less, 200 ppm or less, 160 ppm or less, 150 ppm or less, 120 ppm or less, or 100 ppm or less on a mass basis.

(26) In any one of (1) to (25), a content of the organic expander in the negative electrode material may be 0.005 mass% or more, or 0.01 mass% or more.

(27) In any one of (1) to (26), a content of the organic expander in the negative electrode material may be 1.0 mass% or less, 0.5 mass% or less, 0.3 mass% or less, 0.25 mass% or less, 0.2 mass% or less, 0.15 mass% or less, or 0.12 mass% or less.

(28) In any one of (1) to (27), the organic expander (or the negative electrode material) may contain a first organic expander having a sulfur element content of 2,000 pmol/g or more, or 3,000 pmol/g or more.

(29) In (28), the sulfur element content of the first organic expander may be 9,000 pmol/g or less, or 8,000 pmol/g or less.

(30) In (28) or (29), Mw of the first organic expander may be 7,000 or more.

(31) In any one of (28) to (30), Mw of the first organic expander may be 100,000 or less, or 20,000 or less.

(32) In any one of (1) to (31), the organic expander (or the negative electrode material) may contain a second organic expander having a sulfur element content of less than 2,000 pmol/g.

(33) In (32), the sulfur element content of the second organic expander may be 1,000 pmol/g or less, or 800 pmol/g or less.

(34) In (32) or (33), the sulfur element content of the second organic expander may be 400 pmol/g or more.

(35) In any one of (32) to (34), Mw of the second organic expander may be less than 7,000.

(36) In any one of (32) to (35), Mw of the second organic expander may be 3,000 or more.

(37) In any one of (1) to (36), the organic expander (or the negative electrode material) may contain at least a lignin compound.

(38) In any one of (1) to (37), the negative electrode material may further contain a carbonaceous material.

(39) In (38), a content of the carbonaceous material in the negative electrode material may be 0.05 mass% or more, or 0.10 mass% or more.

(40) In (38) or (39), the content of the carbonaceous material in the negative electrode material may be 5 mass% or less, or 3 mass% or less.

(41) In any one of (1) to (40), the negative electrode material may further contain barium sulfate.

(42) In (41), the content of the barium sulfate in the negative electrode material may be 0.05 mass% or more or 0.10 mass% or more.

(43) In (41) or (42) above, the content of the barium sulfate in the negative electrode material may be 3 mass% or less or 2 mass% or less.

(44) In any one of (1) to (43), a specific gravity of the electrolyte solution at 20°C in the lead-acid battery in a fully charged state may be 1.20 or more, or 1.25 or more.

(45) In any one of (1) to (44), the specific gravity of the electrolyte solution at 20°C in the lead-acid battery in a fully charged state may be 1.35 or less or 1.32 or less.

EXAMPLES

Hereinafter, the present invention will be specifically described based on examples and comparative examples, but the present invention is not limited to the following examples.

<<Lead-acid batteries E1 to E 27, R1 to R3 and C1 to C5>>

(1) Provision of lead-acid battery (a) Preparation of negative electrode plate

A lead powder as a raw material, barium sulfate, carbon black, a polymer compound shown in the table, and an organic expander shown in the table are mixed with an appropriate amount of a sulfuric acid aqueous solution to obtain a negative electrode paste. Here, the components are mixed so that the content of each of the polymer compound and the organic expander in the negative electrode material, which is determined by the procedure described above, is the value shown in the table, the content of barium sulfate is 0.6 mass%, and the content of carbon black is 0.3 mass%. At this time, for the lead-acid battery fully charged after formation, the concentration and amount of the sulfuric acid aqueous solution are controlled so that the bulk density of the negative electrode material determined by the procedure described above is the value shown in the table. A mesh portion of an expanded grid made of a Pb-Ca-Sn alloy is filled with the negative electrode paste, which is then cured and dried to obtain a non-formed negative electrode plate.

As the organic expander shown in the table, the following components are used.

(e1) Lignin: Sodium ligninsulfonate (sulfur element content: 600 pmol/g, Mw = 5500)
(e2) Polybisphenol: Condensate of bisphenol compound having sulfonic acid group introduced and formaldehyde (sulfur element content: 5,000 pmol/g, Mw = 9,600)
(e3) Polybisphenol: Condensate of bisphenol compound having sulfonic acid group introduced and formaldehyde (sulfur element content: 3,000 pmol/g, Mw = 9,000)
(e4) Polybisphenol: Condensate of bisphenol compound having sulfonic acid group introduced and formaldehyde (sulfur element content: 8,000 pmol/g, Mw = 9,200)
(e5) Polybisphenol: Condensate of bisphenol compound having sulfonic acid group introduced and formaldehyde (sulfur element content: 3,000 pmol/g, Mw = 9,600)
(e6) Polybisphenol: Condensate of bisphenol compound having sulfonic acid group introduced and formaldehyde (sulfur element content: 8,000 pmol/g, Mw = 9,600)

(b) Preparation of positive electrode plate

Lead powder as raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-formed positive electrode plate.

(c) Preparation of test battery

A test battery has a rated voltage of 2 V/cell and a rated five-hour rate capacity of 32 Ah. An element of the test battery includes seven positive electrode plates and seven negative electrode plates. The negative electrode plate is housed in a bag-shaped separator formed of a polyethylene microporous membrane, and alternately stacked with the positive electrode plate to form the element. The element is housed in a polypropylene container together with an electrolyte solution (sulfuric acid aqueous solution), and subjected to formation in the container to prepare a flooded-type lead-acid battery. The specific gravity of the electrolyte solution in the lead-acid battery in the fully charged state at 20°C is 1.28.

When the polymer compound has a repeating structure of oxyethylene units, a peak derived from $-CH_2-$ of the oxyethylene unit is observed in a chemical shift range of 3.2 ppm or more and 3.8 ppm or less in a $^1$H-NMR spectrum of the polymer compound which is measured by the foregoing procedure. When the polymer compound has a repeating structure of oxypropylene units, a peak derived from $-CH_2-$ of the oxypropylene unit is observed in a chemical shift range of 3.2 ppm or more and 3.42 ppm or less and a peak derived from -CH< and $-CH_2-$ of the oxypropylene unit is observed in a chemical shift range of more than 3.42 ppm and 3.8 ppm or less in the $^1$H-NMR spectrum of the polymer compound which is measured by the foregoing procedure. In the $^1$H-NMR spectrum, a ratio of an integrated value of the peak of 3.2 ppm to 3.8 ppm to the sum of the integrated value of the peak of 3.2 ppm to 3.8 ppm, an integrated value of a peak of hydrogen atoms of the $-CH_2-$ group bonded to the oxygen atom, and an integrated value of a peak of a hydrogen atom of the -CH< group bonded to the oxygen atom is 96 to 100%.

(2) Evaluation

(a) Amount of overcharge

The integrated value of the amount of overcharge is measured by the foregoing procedure using the test battery.

The amount of overcharge of each lead-acid battery is evaluated as a ratio to the integrated value (Ah) of the amount of the overcharge of the lead-acid battery C 1 which is defined as 100.

(b) Charge acceptability

The amount of electricity at ten seconds is measured by the foregoing procedure using the test battery after full charge. The charge acceptability of each lead-acid battery is evaluated as a ratio to the amount of electricity at ten seconds of the lead-acid battery C 1 which is defined as 100.

Tables 1 to 3 show the results. The tables show the value of a ratio of the evaluation result of charge acceptability (A) to the evaluation result of the amount of overcharge (B), (A)/(B). (A)/(B) in the table is a value obtained by multiplying the actual ratio (A)/(B) by 100. The lead-acid batteries E1 to E27 correspond to examples. The lead-acid batteries R1 to R3 correspond to reference examples. The lead-acid batteries C1 to C5 correspond to comparative examples.

[Table 1]

| Battery No. | Polymer compound | | | Organic expander | | | | Negative electrode material | | Charge acceptability (A) | Amount of overcharge (B) | (A)/(B) |
|---|---|---|---|---|---|---|---|---|---|---|---|---|
| | Type | Mn | Content (mass ppm) | Type | Mw | S element content (μmol·g⁻¹) | Content (mass%) | Bulk density (g·cm⁻³) | Average pore size (μm) | | | |
| C1 | - | - | 0 | Lignin | 5500 | 600 | 0.1 | 4.0 | 6.51 | 100 | 100 | 100 |
| C2 | - | - | 0 | Lignin | 5500 | 600 | | 4.5 | 3.90 | 102 | 113 | 90 |
| C3 | - | - | 0 | Lignin | 5500 | 600 | | 5.0 | 1.41 | 114 | 118 | 97 |
| C4 | - | - | 0 | Polybisphenol | 9600 | 5000 | | 3.0 | 2.25 | 105 | 114 | 92 |
| C5 | - | - | 0 | Polybisphenol | 9600 | 5000 | | 4.0 | 1.29 | 117 | 123 | 96 |
| R1 | PPG | 2000 | 82 | Lignin | 5500 | 600 | 0.1 | 4.0 | 6.79 | 85 | 80 | 107 |
| R2 | | | | Lignin | 5500 | 600 | | 4.5 | 4.10 | 81 | 79 | 103 |
| R3 | | | | Polybisphenol | 9600 | 5000 | | 3.0 | 2.40 | 85 | 80 | 106 |
| E1 | PPG | 2000 | 82 | Lignin | 5500 | 600 | 0.1 | 5.0 | 1.54 | 107 | 85 | 126 |
| E5 | | | | Polybisphenol | 9600 | 5000 | 0.01 | 4.0 | 2.11 | 108 | 87 | 124 |
| E6 | | | | | | | 0.05 | | 1.88 | 109 | 86 | 127 |
| E2 | | | | | | | 0.1 | | 1.52 | 109 | 85 | 128 |
| E7 | | | | | | | 0.2 | | 1.30 | 98 | 74 | 132 |
| E8 | | | | | | | 0.25 | | 1.16 | 90 | 68 | 132 |
| E3 | | | | Polybisphenol | 9000 | 3000 | 0.1 | 4.0 | 1.62 | 108 | 87 | 124 |
| E4 | | | | Polybisphenol | 9200 | 8000 | 0.1 | 4.0 | 1.35 | 113 | 89 | 127 |
| PPG: Polypropylene glycol | | | | | | | | | | | | |

EP 4 231 381 A1

26

As shown in Table 1, reduction of the average pore size improves charge acceptability, but increases the amount of overcharge (comparison of C1 with C2 to C5). If the average pore size of the negative electrode material is more than 2.15 pm, charge acceptability is deteriorated (comparison of C1 with R1, comparison of C2 with R2 and comparison of C4 with R3) although the amount of overcharge is reduced by using the polymer compound for the negative electrode material. If the negative electrode material does not contain a polymer compound, (A)/(B) is 100 or less and it is not possible to achieve both a low amount of overcharge and high charge acceptability (C1 to C5) even when the average pore size is reduced. If the average pore size of the negative electrode material is larger than 2.15 pm, charge acceptability tends to be significantly deteriorated (R1 to R3) although (A)/(B) is larger than 100 even when the negative electrode material contains the polymer compound.

On the other hand, when the average pore size of the negative electrode material is as small as 2.15 pm or less, and the polymer compound is used for the negative electrode material, it is possible to significantly reduce the amount of overcharge and secure high charge acceptability (comparison of E1 to E8 with C1 to C5). In E1 to E8, the value of (A)/(B) is as high as more than 100, and it is possible to achieve both high charge acceptability and a low amount of overcharge. The reason why the amount of overcharge is reduced in E1 to E8 may be that since the negative electrode material contains the polymer compound, the surface of lead is thinly and widely covered with the polymer compound, so that the hydrogen overvoltage increases to reduce the consumption of electricity for a side reaction generating hydrogen during overcharge. It is considered that since the film of the polymer compound covering the surfaces of lead and lead sulfate is thin, elution of lead sulfate and inhibition of the reductive reaction of lead ions into lead are suppressed, and inhibition of movement and diffusion of lead ions in pores is suppressed. Further, since the average pore size is small, a high lead ion diffusion rate is obtained. This may be the reason why the deterioration of the charge acceptability is suppressed. Such an excellent effect is obtained even when the content of the polymer compound in the negative electrode material is only 82 ppm. A high effect is obtained over a wide range of the sulfur element content of the organic expander.

From the viewpoint of securing a high low-temperature high-rate discharge capacity, the content of the organic expander in the negative electrode material is preferably 0.005 mass% or more, more preferably 0.01 mass% or more. From the viewpoint of easily securing higher charge acceptability, the content of the organic expander in the negative electrode material is preferably 0.3 mass% or less, more preferably 0.25 mass% or less or 0.2 mass% or less, still more preferably 0.15 mass% or less or 0.12 mass% or less.

[Table 2]

| Battery No. | Polymer compound | | | Organic expander | | | | Negative electrode material | | Charge acceptability (A) | Amount of overcharge (B) | (A)/(B) |
|---|---|---|---|---|---|---|---|---|---|---|---|---|
| | Type | Mn | Content (mass ppm) | Type | Mw | S element content ($\mu mol \cdot g^{-1}$) | Content (mass%) | Bulk density ($g \cdot cm^{-3}$) | Average pore size ($\mu m$) | | | |
| C1 | - | - | 0 | Lignin | 5500 | 600 | 0.1 | 4.0 | 6.51 | 100 | 100 | 100 |
| C5 | - | - | 0 | Polybisphenol | 9600 | 5000 | 0.1 | 4.0 | 1.29 | 117 | 123 | 96 |

(continued)

| Battery No. | Polymer compound | | | Organic expander | | | | Negative electrode material | | Charge acceptability (A) | Amount of overcharge (B) | (A)/(B) |
|---|---|---|---|---|---|---|---|---|---|---|---|---|
| | Type | Mn | Content (mass ppm) | Type | Mw | S element content ($\mu$mol$\cdot$g$^{-1}$) | Content (mass%) | Bulk density (g$\cdot$cm$^{-3}$) | Average pore size ($\mu$m) | | | |

| Battery No. | Polymer compound | | | Organic expander | | | | Negative electrode material | | Charge acceptability (A) | Amount of overcharge (B) | (A)/ (B) |
|---|---|---|---|---|---|---|---|---|---|---|---|---|
| | Type | Mn | Content (mass ppm) | Type | Mw | S element content ($\mu$mol•g$^{-1}$) | Content (mass%) | Bulk density (g•cm$^{-3}$) | Average pore size ($\mu$m) | | | |
| E2 | PPG | 2000 | | | | | | | 1.52 | 109 | 85 | 128 |
| E9 | PPG | 1000 | | | | | | | 1.34 | 110 | 99 | 111 |
| E10 | PPO adduct of glycerin | 4000 | | | | | | | 1.58 | 108 | 81 | 133 |
| E11 | PEG | 2000 | | | | | | | 1.49 | 110 | 88 | 125 |
| E12 | PEG | 20000 | | | | | | | 1.82 | 95 | 82 | 115 |
| E13 | PEG | 2E+06 | | | | | | | 1.98 | 93 | 81 | 114 |
| E14 | POP-POE block copolymer | 8350 | | | | | | | 1.68 | 105 | 83 | 126 |
| E15 | POEPOP butyl ether (OP unit 43%) | 1800 | 82 | Polybisphenol | 9600 | 5000 | 0.1 | 4.0 | 1.40 | 112 | 86 | 130 |
| E16 | PPG acetate | 1900 | | | | | | | 1.45 | 113 | 87 | 130 |
| E17 | PEG oleate (HLB 8.4) | 500 | | | | | | | 1.32 | 111 | 83 | 134 |
| E18 | PEG dilaurate (HLB 6.6) | 630 | | | | | | | 1.33 | 109 | 85 | 128 |
| E19 | POE lauryl ether (HLB 12.4) | 490 | | | | | | | 1.34 | 105 | 83 | 127 |
| E20 | PEG dioleate (HLB 8.4) | 880 | | | | | | | 1.27 | 113 | 86 | 131 |

EP 4 231 381 A1

30

olypropylene glycol
olypropylene oxide
olyethylene glycol
olyoxypropylene
olyoxyethylene
ypropylene

As shown in Table 2, it is possible to reduce the amount of overcharge while suppressing the deterioration of the charge acceptability even when an etherified product or an esterified product of a hydroxy compound having a repeating structure of oxy $C_{2-4}$ alkylene units is used. Mn of the etherified product or esterified product shown in Table 2 is Mn of the etherified product or esterified product used for preparation of the negative electrode material.

[Table 3]

| Battery No. | Polymer compound | | | Organic expander | | | | Negative electrode material | | Charge acceptability (A) | Amount of overcharge (B) | (A)/(B) |
| | Type | Mn | Content (mass ppm) | Type | Mw | S element content ($\mu$mol·g$^{-1}$) | Content (mass%) | Bulk density (g·cm$^{-3}$) | Average pore size ($\mu$m) | | | |
|---|---|---|---|---|---|---|---|---|---|---|---|---|
| C1 | - | - | 0 | Lignin | 5500 | 600 | 0.1 | 4.0 | 6.51 | 100 | 100 | 100 |
| C5 | - | - | 0 | Polybisphenol | 9600 | 5000 | 0.1 | 4.0 | 1.29 | 117 | 123 | 96 |
| E21 | PPG | 2000 | 30 | Polybisphenol | 9600 | 5000 | 0.1 | 4.0 | 1.35 | 115 | 104 | 110 |
| E22 | | | 10 | | 9600 | 3000 | 0.1 | 4.0 | 1.56 | 106 | 98 | 108 |
| E23 | | | 30 | | 9600 | 3000 | 0.1 | 4.0 | 1.58 | 104 | 91 | 114 |
| E24 | | | 60 | | 9600 | 5000 | 0.1 | 4.0 | 1.43 | 112 | 95 | 118 |
| E2 | | | 82 | | | | | | 1.52 | 109 | 85 | 128 |
| E25 | | | 120 | | | | | | 1.59 | 101 | 78 | 129 |
| E26 | | | 160 | | 9600 | 8000 | 0.1 | 4.5 | 1.49 | 102 | 80 | 128 |
| E27 | | | 300 | | 9600 | 8000 | 0.1 | 5.0 | 1.32 | 101 | 77 | 131 |

PPG: Polypropylene glycol

As shown in Table 3, the content of the polymer compound in the negative electrode material is preferably 10 ppm or more, more preferably 20 ppm or more, or 30 ppm or more, from the viewpoint of enhancing the effect of reducing the amount of overcharge. From the viewpoint of easily securing higher charge acceptability, the content of the polymer compound in the negative electrode material is preferably 400 ppm or less, more preferably 300 ppm or less or 200 ppm or less, still more preferably 160 ppm or less or 150 ppm or less, and may be 120 ppm or less or 100 ppm or less.

INDUSTRIAL APPLICABILITY

The lead-acid batteries according to one aspect and another aspect of the present invention are suitable for use in an idling stop vehicle as, for example, a lead-acid battery for IS that is subjected to charge-discharge under PSOC conditions. The lead-acid battery can be suitably used as, for example, a power source for starting a vehicle (automobiles, motorcycles, etc.), and an industrial energy storage apparatus (for example, a power source of an electric vehicle (such as forklift) or the like). These are merely illustrative, and the application of the lead-acid battery is not limited thereto.

DESCRIPTION OF REFERENCE SIGNS

1:      lead-acid battery
2:      negative electrode plate
3:      positive electrode plate
4:      separator
5:      positive electrode shelf
6:      negative electrode shelf
7:      positive pole
8:      penetrating connection body
9:      negative pole
11:     element
12:     container
13:     partition
14:     cell chamber
15:     lid
16:     negative electrode terminal
17:     positive electrode terminal
18:     vent plug

**Claims**

1. A lead-acid battery comprising at least one cell including an element and an electrolyte solution, wherein

    the element includes a negative electrode plate, a positive electrode plate, and a separator interposed between the negative electrode plate and the positive electrode plate,
    the negative electrode plate includes a negative electrode material,
    the negative electrode material contains an organic expander, and a polymer compound having a peak in a range of 3.2 ppm or more and 3.8 ppm or less in a chemical shift of a $^1$H-NMR spectrum measured using deuterated chloroform as a solvent, and
    a median diameter of the negative electrode material in a pore distribution on a volume basis is 2.15 pm or less.

2. The lead-acid battery according to claim 1, wherein

    the polymer compound contains an oxygen atom bonded to a terminal group and a $-CH_2-$ group and/or a -CH< group bonded to the oxygen atom, and
    in the $^1$H-NMR spectrum, a ratio of an integrated value of the peak to a sum of the integrated value of the peak, an integrated value of a peak of a hydrogen atom of the $-CH_2-$ group, and an integrated value of a peak of a hydrogen atom of the -CH< group is 85% or more.

3. The lead-acid battery according to claim 1 or 2, wherein the polymer compound has a repeating structure of oxy

$C_{2-4}$ alkylene units.

4. A lead-acid battery comprising at least one cell including an element and an electrolyte solution, wherein

the element includes a negative electrode plate, a positive electrode plate, and a separator interposed between the negative electrode plate and the positive electrode plate,
the negative electrode plate includes a negative electrode material,
the negative electrode material contains an organic expander, and a polymer compound having a repeating structure of oxy $C_{2-4}$ alkylene units, and
a median diameter of the negative electrode material in a pore distribution on a volume basis is 2.15 pm or less.

5. The lead-acid battery according to any one of claims 1 to 4, wherein the polymer compound contains a compound having a number average molecular weight of 10,000 or less.

6. The lead-acid battery according to any one of claims 1 to 5, wherein the polymer compound contains a compound having a number average molecular weight of 400 or more.

7. The lead-acid battery according to any one of claims 1 to 6, wherein

the polymer compound contains at least one selected from a group consisting of a hydroxy compound having a repeating structure of oxy $C_{2-4}$ alkylene units, an etherified product of the hydroxy compound and an esterified product of the hydroxy compound, and
the hydroxy compound is at least one selected from a group consisting of a poly $C_{2-4}$ alkylene glycol, a copolymer having a repeating structure of oxy $C_{2-4}$ alkylene, and a poly $C_{2-4}$ alkylene oxide adduct of a polyol.

8. The lead-acid battery according to any one of claims 1 to 7, wherein the polymer compound has a repeating structure of oxypropylene units.

9. The lead-acid battery according to claim 7, wherein the polymer compound has one or more hydrophobic groups, and at least one of the hydrophobic groups is a long-chain aliphatic hydrocarbon group having 8 or more carbon atoms.

10. The lead-acid battery according to claim 7 or 9, wherein the polymer compound has a repeating structure of oxyethylene units.

11. The lead-acid battery according to any one of claims 1 to 10, wherein a content of the polymer compound in the negative electrode material is 8 ppm or more on a mass basis.

12. The lead-acid battery according to any one of claims 1 to 11, wherein the content of the polymer compound in the negative electrode material is 400 ppm or less on a mass basis.

13. The lead-acid battery according to any one of claims 1 to 12, wherein a content of the organic expander in the negative electrode material is 0.005 mass% or more.

14. The lead-acid battery according to any one of claims 1 to 13, wherein the content of the organic expander in the negative electrode material is 0.3 mass% or less.

15. The lead-acid battery according to any one of claims 1 to 14, wherein the organic expander contains at least a lignin compound.

16. The lead-acid battery according to any one of claims 1 to 15, wherein a bulk density of the negative electrode material is 3.6 g/cm$^3$ or more.

17. The lead-acid battery according to any one of claims 1 to 16, wherein the median diameter of the negative electrode material in the pore distribution on the volume basis is 0.95 pm or more.

Fig. 1

## INTERNATIONAL SEARCH REPORT

| International application No. |
|---|
| **PCT/JP2021/039741** |

**A. CLASSIFICATION OF SUBJECT MATTER**

*H01M 4/14*(2006.01)i; *H01M 4/62*(2006.01)i; *H01M 10/06*(2006.01)i
FI:  H01M4/62 B; H01M4/14 Q; H01M10/06 Z

According to International Patent Classification (IPC) or to both national classification and IPC

**B. FIELDS SEARCHED**

Minimum documentation searched (classification system followed by classification symbols)

H01M4/14; H01M4/62; H01M10/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-18803 A (GS YUASA CORP.) 01 February 2018 (2018-02-01) | 1-11, 13-17 |
|   |     paragraphs [0054]-[0076], fig. 1-3 |   |
| A |   | 12 |
| Y | JP 60-182662 A (JAPAN STORAGE BATTERY CO., LTD.) 18 September 1985 (1985-09-18) | 1- 8, 10-11, 13-17 |
|   |     p. 1, lower right column, line 14 to p. 3, upper right column, line 1, fig. 1, 2 |   |
| A |   | 9, 12 |
| Y | JP 9-147869 A (SHIN KOBE ELECTRIC MACHINERY CO., LTD.) 06 June 1997 (1997-06-06) | 1-7, 9-11, 13-17 |
|   |     paragraphs [0007]-[0016], fig. 1, 2 |   |
| A |   | 8, 12 |
| Y | JP 51-47237 A (YUASA BATTERY CO., LTD.) 22 April 1976 (1976-04-22) | 1-7, 10-11, 13-17 |
|   |     p. 1, lower left column, lines 11-15, p. 2, upper left column, line 3 to p. 2, upper right column, line 14, fig. 1, 2 |   |
| A |   | 8-9, 12 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |   |
|   | Telephone No. |

Form PCT/ISA/210 (second sheet) (January 2015)

**INTERNATIONAL SEARCH REPORT**

| | International application No. |
|---|---|
| | **PCT/JP2021/039741** |

## C.    DOCUMENTS CONSIDERED TO BE RELEVANT

| Category* | Citation of document, with indication, where appropriate, of the relevant passages | Relevant to claim No. |
|---|---|---|
| Y | CN 108630937 A (ZHEJIANG UNIVERSITY OF TECHNOLOGY) 09 October 2018 (2018-10-09) paragraphs [0031]-[0070] | 1-7, 10-11, 13-17 |
| A | | 8-9, 12 |
| Y | CN 101937996 A (FENGFAN CO., LTD.) 05 January 2011 (2011-01-05) paragraphs [0013]-[0028] | 1-7, 10-11, 13-17 |
| A | | 8-9, 12 |
| P, A | WO 2020/241878 A1 (GS YUASA CORP.) 03 December 2020 (2020-12-03) | 1-17 |
| P, A | WO 2020/241886 A1 (GS YUASA CORP.) 03 December 2020 (2020-12-03) | 1-17 |

Form PCT/ISA/210 (second sheet) (January 2015)

## INTERNATIONAL SEARCH REPORT
### Information on patent family members

International application No.

**PCT/JP2021/039741**

| Patent document cited in search report | | | Publication date (day/month/year) | Patent family member(s) | Publication date (day/month/year) |
|---|---|---|---|---|---|
| JP | 2018-18803 | A | 01 February 2018 | (Family: none) | |
| JP | 60-182662 | A | 18 September 1985 | (Family: none) | |
| JP | 9-147869 | A | 06 June 1997 | (Family: none) | |
| JP | 51-47237 | A | 22 April 1976 | (Family: none) | |
| CN | 108630937 | A | 09 October 2018 | (Family: none) | |
| CN | 101937996 | A | 05 January 2011 | (Family: none) | |
| WO | 2020/241878 | A1 | 03 December 2020 | (Family: none) | |
| WO | 2020/241886 | A1 | 03 December 2020 | (Family: none) | |

Form PCT/ISA/210 (patent family annex) (January 2015)

**EP 4 231 381 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60182662 A
- JP 2014123525 A
- JP 2017525092 W